(19)
Europäisches Patentamt
European Patent Office
Office européen des brevets

(11) **EP 2 271 012 A1**

(12) **EUROPEAN PATENT APPLICATION**
published in accordance with Art. 153(4) EPC

(43) Date of publication:
**05.01.2011 Bulletin 2011/01**

(21) Application number: **09735156.3**

(22) Date of filing: **20.04.2009**

(51) Int Cl.:
*H04J 11/00* (2006.01)    *H04B 1/10* (2006.01)
*H04J 99/00* (2009.01)    *H04L 1/18* (2006.01)
*H04W 28/04* (2009.01)

(86) International application number:
**PCT/JP2009/057852**

(87) International publication number:
**WO 2009/131094 (29.10.2009 Gazette 2009/44)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **22.04.2008 JP 2008111362**

(71) Applicant: **Sharp Kabushiki Kaisha**
**Osaka-shi, Osaka 545-8522 (JP)**

(72) Inventors:
• **SHIMEZAWA, Kazuyuki**
**c/o Sharp kabushiki Kaisha**
**Osaka 545-8522 (JP)**

• **YOSHIMOTO, Takashi**
**c/o Sharp kabushiki Kaisha**
**Osaka 545-8522 (JP)**
• **YAMADA, Ryota**
**c/o Sharp kabushiki Kaisha**
**Osaka 545-8522 (JP)**

(74) Representative: **Müller - Hoffmann & Partner**
**Patentanwälte**
**Innere Wiener Strasse 17**
**81667 München (DE)**

(54) **COMMUNICATION DEVICE, COMMUNICATION SYSTEM, RECEPTION METHOD, AND PROGRAM**

(57)    A communication device in a communication system which requests a retransmission signal when an error is detected from an initial transmission signal detected from a reception signal, the communication device including: a storage unit which stores information indicated by the detected initial transmission signal; a reception unit which receives a signal including a desired signal; an a priori information generation unit which generates a priori information for detecting the desired signal from the signal received by the reception unit based on the information stored by the storage unit when a retransmission signal related to the initial transmission signal of the information stored by the storage unit interferes with the desired signal; and a signal detection unit which detects the desired signal from the signal received by the reception unit using the a priori information. Therefore, the number of retransmission is reduced.

FIG. 2

EP 2 271 012 A1

**Description**

TECHNICAL FIELD

The present invention relates to a communication device, a communication system, a reception method, and a program, and more particularly to a communication device, a communication system, a reception method, and a program that perform hybrid automatic repeat request.
This application claims priority to and the benefits of Japanese Patent Application No. 2008-111362 filed on April 22, 2008, the disclosure of which is incorporated herein by reference.

BACKGROUND ART

For example, in multicarrier transmission schemes such as an orthogonal frequency division multiplexing (OFDM) scheme and an orthogonal frequency division multiple access (OFDMA) scheme, a transmitter adds a guard interval (GI) to reduce the effect of multipath interference.

When there is an incoming wave exceeding a GI in these schemes, inter-symbol interference (ISI) is caused by a previous symbol inserted into a fast Fourier transform (FFT) interval, and inter-carrier interference (ICI) is caused by a break in a symbol, that is, a discontinuous interval in a signal, which is included in the FFT interval.

A technique for improving the characteristic degradation by ISI and ICI in the above-described case where there is an incoming wave exceeding the GI has been proposed in the following Patent Document 1. In this related art, a replica signal of an undesired sub-carrier including the above-described ISI component and the above-described ICI component is created using an error correction result (the output of a MAP decoder) after one demodulation operation is performed. The characteristics of the ISI and ICI are improved by performing another demodulation operation on the result obtained by removing the replica signal from a received signal.

On the other hand, a multi carrier-code division multiplexing (MC-CDM) scheme, a multi carrier-code division multiple access (MC-CDMA) scheme, a spread-orthogonal frequency and code division multiplexing (OFCDM) scheme, and the like have been proposed as combinations of a multi-carrier transmission scheme and a code division multiplexing (CDM) scheme.

In these schemes, for example, a signal code-multiplexed by frequency direction spreading using orthogonal codes such as Walsh-Hadamard codes is received via a multipath environment. When there is a frequency fluctuation within an orthogonal code cycle in the received signal, the orthogonality between orthogonal codes is not maintained. Thus, multi-code interference (MCI) occurs and becomes the cause of characteristic degradation. A method of improving the characteristic degradation by the destruction of orthogonality between codes is disclosed in Patent Document 2 and Non-Patent Document 1. In these related art, there is a difference between uplink and downlink, but characteristics are improved by performing another demodulation operation on the result obtained by removing a signal except for a desired signal by using a replica signal after the replica signal is created using data after despreading or after error correction so as to remove MCI by code multiplexing upon MC-CDM communication in both the uplink and the downlink.

As is common in the above-described related art, a receiver generates an interference signal based on a replica signal generated after demodulating a received signal for the cancellation of interference such as the above-described ISI, ICI, or MCI, and performs interference cancellation. By iterating these processes, it is possible to improve the accuracy of a replica signal and to accurately perform interference cancellation.

However, when there is much interference such as the above-described ISI, ICI, and MCI, the interference may not be fully removed even when an iterative process using the interference canceller is performed. Thus, desired data is not normally demodulated and an error occurs.
As a method of controlling such an error, a combination of automatic repeat request (ARQ) and an error correction code of turbo coding or the like is known as hybrid ARQ (HARQ). Particularly, chase combining (CC) and incremental redundancy (IR) are well-known in HARQ, and are respectively disclosed in Non-Patent Document 2 and Non-Patent Document 3.

For example, when an error is detected from a reception packet in HARQ using CC, the retransmission of the completely same packet is requested. The quality of reception is improved by combining the two reception packets. Also, in HARQ using IR, parity bits are divided and sequentially retransmitted little by little. Thus, as the number of retransmissions is increased, the coding rate may be decreased and the error correction capability may be enhanced.

Patent Document 1: Japanese Unexamined Patent Publication, First Publication No. 2004-221702
Patent Document 2: Japanese Unexamined Patent Publication, First Publication No. 2005-198223

Non-Patent Document 1: Y. Zhou, J. Wang, and M. Sawahashi, "Downlink Transmission of Broadband OFCDM Systems-Part I: Hybrid Detection," IEEE Transaction on Communication, Vol. 53, Issue 4, pp. 718-729, April 2005.
Non-Patent Document 2: D. Chase, "Code combining-A maximum likelihood decoding approach for combing and arbitrary number of noisy packets," IEEE Trans. Commun., Vol. COM-33, pp. 385-393, May 1985.
Non-Patent Document 3: J. Hagenauer, "Rate-compatible punctured convolutional codes (RCPC codes) and their application," IEEE Trans. Commun., Vol. 36, pp. 389-400, April 1988.

DISCLOSURE OF INVENTION

Problem to be Solved by the Invention

However, if large interference occurs in the above-described hybrid automatic repeat request (HARQ), there is a problem in that a data error is not sufficiently corrected, the quality of transmission is degraded, and the number of retransmissions is increased.
The present invention has been made in view of the above-described circumstances, and an object of the present invention is to provide a communication device, a communication system, a reception method, and a program that can reduce the number of retransmissions in a communication system using HARQ.

Means for Solving the Problem

The present invention has been made to solve the above-described problem. According to an aspect of the present invention, there is provided a communication device in a communication system which performs hybrid automatic repeat request for requesting a retransmission signal when an error is detected from an initial transmission signal detected from a reception signal, the communication device including: a storage unit which stores information indicated by the detected initial transmission signal; a reception unit which receives a signal including a desired signal; an a priori information generation unit which generates a priori information for detecting the desired signal from the signal received by the reception unit based on the information stored by the storage unit when a retransmission signal related to the initial transmission signal of the information stored by the storage unit interferes with the desired signal; and a signal detection unit which detects the desired signal from the signal received by the reception unit using the a priori information.
Thereby, the communication device of the present invention can improve the reliability of interference cancellation for a desired signal upon detection since a priori information is generated based on information indicated by an initial transmission signal received before a retransmission signal and the desired signal is detected using the a priori information when the retransmission signal interferes with the desired signal, and can reduce the number of retransmissions since error detection frequency is suppressed in error detection for retransmission packets.
According to the aspect of the present invention, the retransmission signal may be a signal capable of being generated by processing the information indicated by the initial transmission signal using a preset method, and the a priori information generation unit may generate the a priori information based on a signal generated by processing the information stored by the storage unit in the method.
According to the aspect of the present invention, the information indicated by the initial transmission signal may be a bit stream including at least a part of a bit stream obtained by error correction coding an information bit stream transmitted by the initial transmission signal, the information bit stream being capable of being generated by error correction decoding the bit stream, and wherein in the preset method, the information bit stream obtained from a bit stream that is the information indicated by the initial transmission signal may be error correction coded, at least some bits may be extracted from preset positions, and a signal for transmitting the extracted bits may be generated.
According to the aspect of the present invention, the desired signal may be a retransmission signal related to the initial transmission signal of the information stored by the storage unit, the a priori information generation unit may generate a transmission signal replica of the retransmission signal as the a priori information, and the signal detection unit may generate an interference signal replica of inter-symbol interference to the retransmission signal from the transmission signal replica and remove the interference signal replica from the signal received by the reception unit to detect the retransmission signal.
According to the aspect of the present invention, the desired signal may be a retransmission signal related to the initial transmission signal of the information stored by the storage unit, the a priori information generation unit may generate information indicating a likelihood of each bit constituting the retransmission signal as the a priori information, and the signal detection unit may equalize the signal received by the reception unit using the information indicating the likelihood of each bit constituting the retransmission signal generated by the a priori information generation unit and detect the desired signal.
According to the aspect of the present invention, the desired signal may be a signal multiplexed with a retransmission signal related to the initial transmission signal of the information stored by the storage unit, the a priori information generation unit may generate a transmission signal replica of the retransmission signal as the a priori information, and

the signal detection unit may generate an interference signal replica to the retransmission signal from the transmission signal replica, and remove the interference signal replica from the signal received by the reception unit to detect the retransmission signal.

According to the aspect of the present invention, the multiplexing may be spatial multiplexing by which the desired signal and the retransmission signal are transmitted from different antennas and multiplexed, code division multiplexing by which the desired signal and the retransmission signal are spread by different spreading codes and multiplexed, or frequency division multiplexing by which the desired signal and the retransmission signal are assigned to different frequencies and multiplexed, and the interference signal replica may be an interference signal replica related to interference between the multiplexed signals.

According to the aspect of the present invention, the signal detection unit may perform an iterative process and detects the desired signal.

According to the aspect of the present invention, the signal detection unit may use the a priori information only in an initial process in the iterative process.

According to another aspect of the present invention, there is provided a communication device in a communication system which performs hybrid automatic repeat request for requesting a retransmission signal when an error is detected from an initial transmission signal detected from a received signal, the communication device including: a storage unit which stores information indicated by a detected initial transmission signal; a reception unit which receives a signal including a retransmission signal related to the initial transmission signal of the information stored by the storage unit; an a priori information generation unit which generates information indicating a likelihood of each bit constituting the retransmission signal as a priori information for performing a decoding process for the retransmission signal based on the information stored by the storage unit; a signal detection unit which detects the retransmission signal from the signal received by the reception unit; and a signal decoding unit which performs an error correction decoding process for the retransmission signal detected by the signal detection unit using the a priori information generated by the a priori information generation unit, and detects bits constituting the retransmission signal.

According to still another aspect of the present invention, there is provided a communication system including a first communication device and a second communication device that communicates with the first communication device, the second communication device performing hybrid automatic repeat request for requesting the first communication device to transmit a retransmission signal when the second communication device detects an error from an initial transmission signal, wherein the second communication device includes: a storage unit which stores information indicated by a detected initial transmission signal; a reception unit which receives a signal including a desired signal; an a priori information generation unit which generates a priori information for detecting the desired signal from the signal received by the reception unit based on the information stored by the storage unit when a retransmission signal related to the initial transmission signal of information stored by the storage unit interferes with the desired signal; and a signal detection unit which detects the desired signal from the signal received by the reception unit using the a priori information.

According to still another aspect of the present invention, there is provided a reception method in a communication system including a first communication device and a second communication device that communicates with the first communication device, the second communication device performing hybrid automatic repeat request for requesting the first communication device to transmit a retransmission signal when the second communication device detects an error from an initial transmission signal, the reception method including: receiving, by the second communication device, a signal including a desired signal; generating, by the second communication device, a priori information for detecting the desired signal from the signal received in the reception based on information indicated by an initial transmission signal of a retransmission signal stored by a storage unit when the retransmission signal interferes with the desired signal; and detecting, by the second communication device, the desired signal from the signal received in the reception using the a priori information.

According to still another aspect of the present invention, there is provided a program for causing a computer of a communication device in a communication system which performs hybrid automatic repeat request for requesting a retransmission signal when an error is detected from an initial transmission signal detected from a reception signal, to function as: an a priori information generation unit which generates, when the retransmission signal interferes with a desired signal, a priori information for detecting the desired signal from a received signal based on information indicated by an initial transmission signal of the retransmission signal stored by a storage unit; and a signal detection unit which detects the desired signal from the received signal using the a priori information.

Effect of the Invention

The present invention can improve the reliability of interference cancellation for a desired signal since the desired signal which interferes with a retransmission signal is obtained using a priori information generated from information indicated by a stored initial transmission signal, and can reduce the number of retransmissions since error detection frequency is suppressed in error detection for desired signals.

BRIEF DESCRIPTION OF THE DRAWINGS

FIG. 1 is a schematic block diagram showing the configuration of a packet transmission device 1 according to a first embodiment of the present invention.

FIG. 2 is a schematic block diagram showing the configuration of a packet reception device 2 according to the first embodiment.

FIG. 3 is a schematic block diagram showing the configuration of an interference cancellation unit 206 according to the first embodiment.

FIG. 4 is a schematic block diagram showing the configuration of a HARQ processing unit 211 according to the first embodiment.

FIG. 5 is a schematic block diagram showing the configuration of a signal decoding unit 212 according to the first embodiment.

FIG. 6 is a schematic block diagram showing the configuration of a replica signal generation unit 215 according to the first embodiment.

FIG. 7 is a flowchart illustrating the operation of the packet reception device 2 according to the first embodiment.

FIG. 8 is a sequence diagram showing an operation example of the packet transmission device 1 and the packet reception device 2 according to the first embodiment.

FIG. 9 is a schematic block diagram showing the configuration of an encoding unit 101 in the packet transmission device 1 according to the first embodiment.

FIG. 10 is a diagram showing an example of a puncturing pattern according to the first embodiment.

FIG. 11 is a schematic block diagram showing the configuration of an error correction decoding unit 251 when CC is used in HARQ according to the first embodiment.

FIG. 12 is a diagram showing an example of a puncturing pattern according to the first embodiment.

FIG. 13 shows an example of combining by a packet combining unit 241 according to the first embodiment.

FIG. 14 is a schematic block diagram showing the configuration of a packet reception device 4 according to a second embodiment of the present invention.

FIG. 15 is a schematic block diagram showing the configuration of a HARQ processing unit 404 according to the second embodiment.

FIG. 16 is a schematic block diagram showing the configuration of a signal decoding unit 405 according to the second embodiment.

FIG. 17 is a schematic block diagram showing the configuration of a packet transmission device 5 according to a third embodiment of the present invention.

FIG. 18 is a schematic block diagram showing the configuration of a packet reception device 6 according to the third embodiment.

FIG. 19 is a schematic block diagram showing the configuration of a signal separation unit 606 according to the third embodiment.

FIG. 20 is a schematic block diagram showing the configuration of a packet reception device 7 according to a fourth embodiment of the present invention.

FIG. 21 is a schematic block diagram showing the configuration of a signal decoding unit 701 according to the fourth embodiment.

FIG. 22 is a schematic block diagram showing the configuration of a packet reception device 8 according to a fifth embodiment of the present invention.

FIG. 23 is a schematic block diagram showing the configuration of a replica signal generation unit 801 according to the fifth embodiment.

BEST MODE FOR CARRYING OUT THE INVENTION

[First Embodiment]

This embodiment aims at a communication system using hybrid automatic repeat request (HARQ) which requests a transmitter to transmit a retransmission packet when a receiver detects an error from an initial transmission packet. The communication system includes a packet transmission device (first communication device) 1 and a packet reception device (communication device or second communication device) 2. The packet reception device 2 performs an iterative process using a frequency domain interference canceller upon packet reception. A method of reducing the number of retransmissions and the number of iterative processes by performing interference cancellation of an initial process for a retransmission packet using a replica signal generated from an initial transmission packet when the packet reception device 2 receives the retransmission packet will now be described with reference to the drawings.

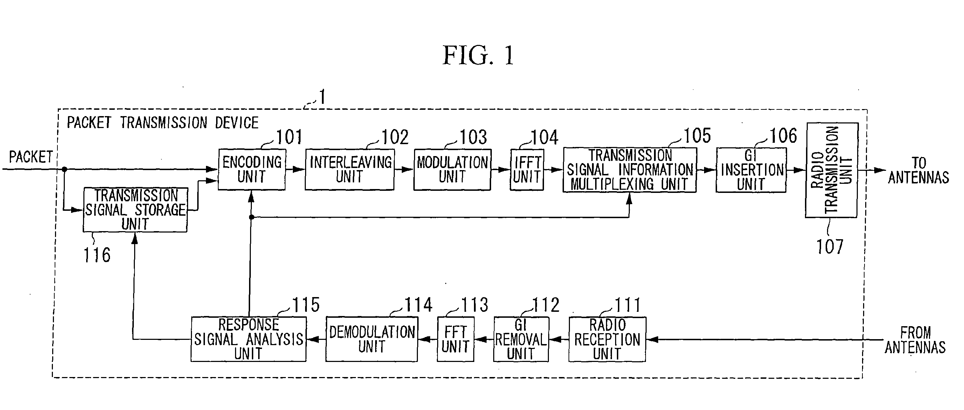

FIG. 1 is a schematic block diagram showing the configuration of the packet transmission device (first communication device) 1 according to this embodiment. The packet transmission device 1 includes an encoding unit 101, an interleaving unit 102, a modulation unit 103, an IFFT (inverse fast Fourier transform) unit 104, a transmission signal information multiplexing unit 105, a GI (guard interval) insertion unit 106, a radio transmission unit (transmission unit) 107, a transmission signal storage unit 116, a response signal analysis unit 115, a demodulation unit 114, an FFT (fast Fourier transform) unit 113, a GI removal unit 112, and a radio reception unit 111.

First, when information bits to be transmitted to the packet reception device 2 of a communication partner are input in a packet unit, the packet transmission device 1 inputs the information bits to the encoding unit 101 and also inputs the information bits to the transmission signal storage unit 116. Here, a packet is set as a unit in which error detection coding is performed. The transmission signal storage unit 116 stores the information bits so that the transmitted information bits are retransmitted if there is a retransmission request from the packet reception device 2. The encoding unit 101 performs error detection coding for the input information bits, performs error correction coding by a convolutional code, a turbo code, a low density parity check (LDPC) code, or the like, and generates coded bits.

The interleaving unit 102 performs an interleaving process for the coded bits generated by the encoding unit 101. The modulation unit 103 maps the interleaved coded bits to a modulation symbol of quadrature phase shift keying (QPSK), 16 quadrature amplitude modulation (QAM), or the like. The IFFT unit 104 performs frequency-to-time conversion for the modulation symbol by an IFFT process or the like, and generates a time domain signal.

The transmission signal information multiplexing unit 105 multiplexes a signal of transmission signal information as information regarding a transmission signal such as whether a packet to be transmitted is initially transmitted or retransmitted into the time domain signal output by the IFFT unit 104. In this multiplexing, it is preferable to transmit the transmission signal information so that the receiver is able to separate the transmission signal information. For example, the multiplexing may use time division multiplexing, frequency division multiplexing, code division multiplexing, or the like. The GI insertion unit 106 inserts a GI into a signal into which the signal of the transmission signal information is multiplexed. The radio transmission unit 107 performs digital-to-analog conversion, frequency conversion into a radio transmission frequency, and the like for the signal into which the GI is inserted, and wirelessly transmits the signal via antennas.

The radio reception unit 111 receives a signal including a response signal transmitted by the packet reception device 2 via antennas and performs frequency conversion, analog-to-digital conversion, and the like. The response signal is a notification signal from the packet reception device 2 to the packet transmission device 1, wherein the notification signal indicates whether or not the packet reception device 2 accurately receives information bits transmitted by the packet transmission device 1 to the packet reception device 2. For example, the response signal is an acknowledgement (ACK) of a receipt notification when the signal is accurately received, and the response signal is a negative acknowledgement (NACK) of a non-receipt notification when the signal is not accurately received.

The GI removal unit 112 removes a GI from the digital converted signal. The FFT unit 113 performs an FFT process for the signal from which the GI is removed, and converts the signal into a frequency domain signal. The demodulation unit 114 demodulates the frequency domain signal. The response signal analysis unit 115 analyzes the modulated signal as a response signal, and analyzes whether a response to a packet transmitted by the packet transmission device 1 to the packet reception device 2 is the receipt notification (ACK) or the non-receipt notification (NACK).

When the response signal is the receipt notification (ACK), the packet transmission device 1 does not perform retransmission and the transmission signal storage unit 116 discards stored information bits of a corresponding packet. On the other hand, when the response signal is the non-receipt notification (NACK), the packet transmission device 1 performs the retransmission. To perform the retransmission, the encoding unit 101 reads out the information bits stored in the transmission signal storage unit 116, and perform error correction codes to the information bits. Here, for example, in the case of the retransmission using chase combining (CC), the same coded bits as those of an initially transmitted packet (also referred to as an initial transmission packet) are generated as a retransmission packet.

In the case of the retransmission using incremental redundancy (IR), the encoding unit 101 outputs coded bits including a parity bit (redundant bit) different from that of the initial transmission packet as a retransmission packet by a puncturing process to be described later. Hereinafter, the modulation unit 103, the IFFT unit 104, the transmission signal information multiplexing unit 105, the GI insertion unit 106, and the radio transmission unit 107 perform the same processes as described above and transmit the retransmission packet to the packet reception device 2.

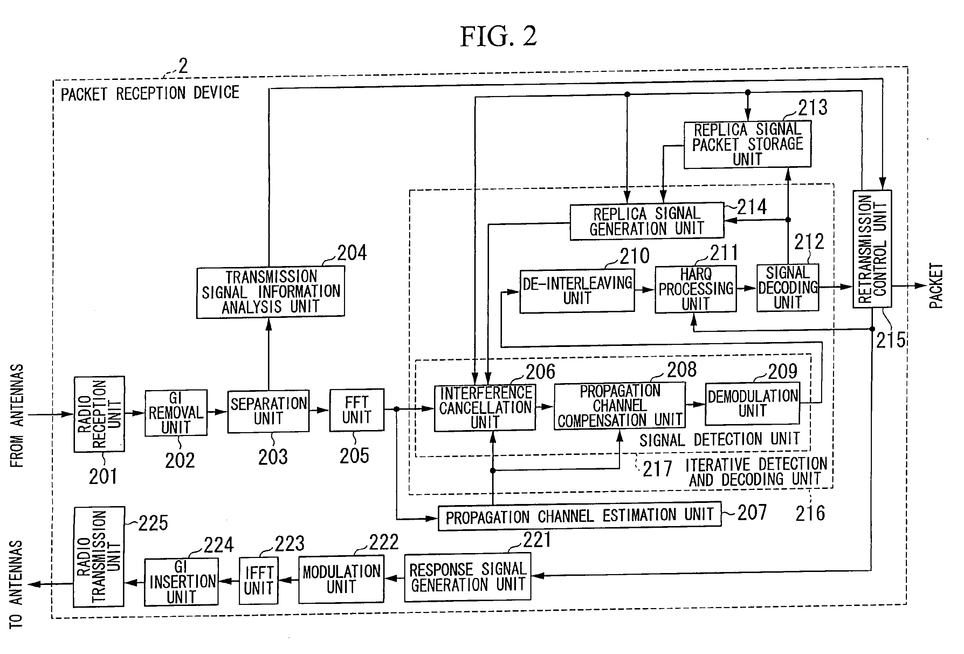

FIG. 2 is a schematic block diagram showing the configuration of the packet reception device 2 according to this embodiment. The packet reception device 2 includes a radio reception unit (reception unit) 201, a GI removal unit 202, a separation unit 203, a transmission signal information analysis unit 204, an FFT unit 205, an interference cancellation unit (soft cancellation unit or interference removal unit) 206, a propagation channel estimation unit 207, a propagation channel compensation unit (minimum mean square error (MMSE) filter unit) 208, a demodulation unit 209, a de-interleaving unit 210, a HARQ processing unit 211, a signal decoding unit 212, a replica signal packet storage unit (storage unit) 213, a replica signal generation unit (a priori information generation unit) 214, a retransmission control unit 215, a response signal generation unit 221, a modulation unit 222, an IFFT unit 223, a GI insertion unit 224, and a radio transmission unit 225. The interference cancellation unit 206, the propagation channel compensation unit 208, the demodulation unit 209, the de-interleaving unit 210, the HARQ processing unit 211, the signal decoding unit 212, and the replica signal generation unit 214 function as an iterative detection and decoding unit 216. The interference cancellation unit 206, the propagation channel compensation unit 208, and the demodulation unit 209 function as a signal detection unit 217.

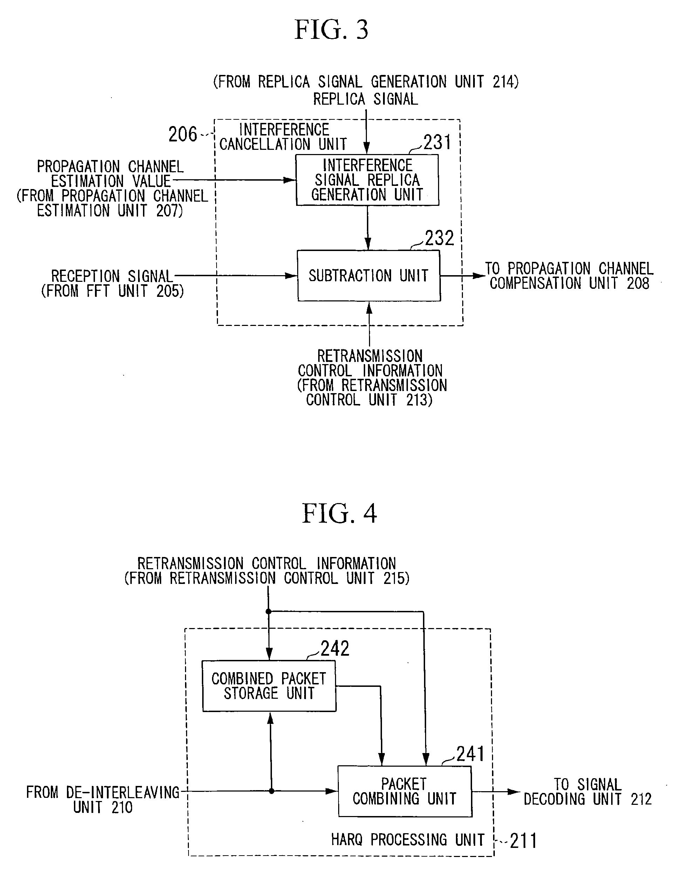

FIG. 3 is a schematic block diagram showing the configuration of the interference cancellation unit 206 according to this embodiment. The interference cancellation unit 206 includes an interference signal replica generation unit 231 and a subtraction unit 232.

FIG. 4 is a schematic block diagram showing the configuration of the HARQ processing unit 211 according to this embodiment. The HARQ processing unit 211 includes a packet combining unit 241 and a combined packet storage unit (combined signal storage unit) 242.

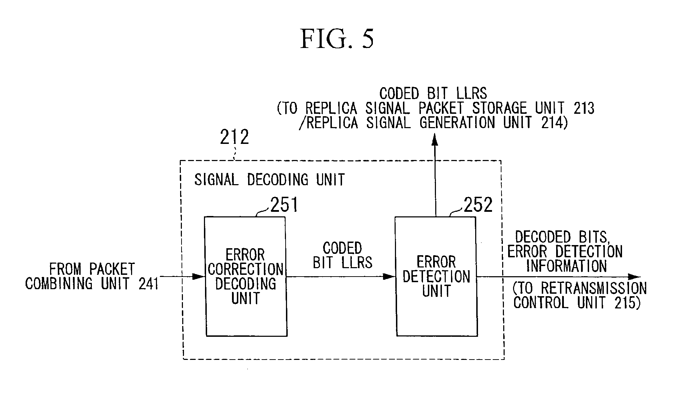

FIG. 5 is a schematic block diagram showing the configuration of the signal decoding unit 212. The signal decoding unit 212 includes an error correction decoding unit 251 and an error detection unit 252.

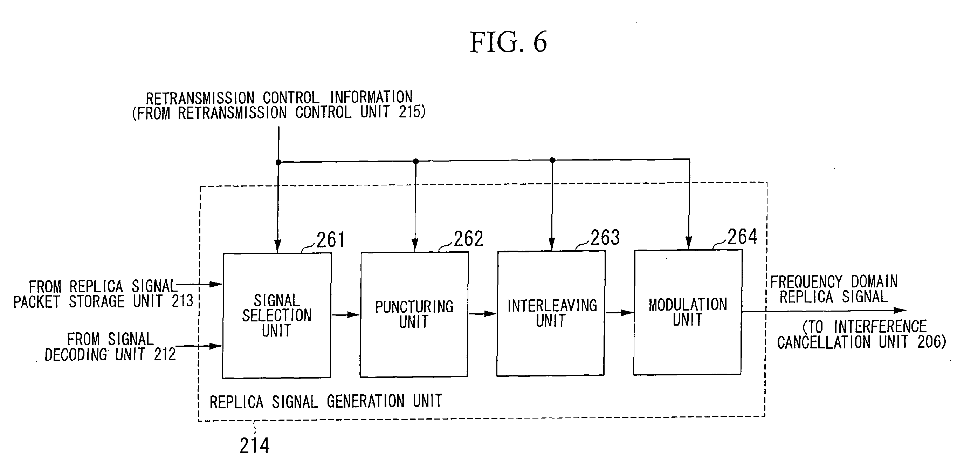

FIG. 6 is a schematic block diagram showing the configuration of the replica signal generation unit 214 according to this embodiment. The replica signal generation unit 214 includes a signal selection unit 261, a puncturing unit 262, an interleaving unit 263, and a modulation unit 264.

Hereinafter, first, an operation when the packet reception device 2 receives an initial transmission packet will be described with reference to FIGS. 2 to 6. The radio reception unit 201 (FIG. 2) performs frequency conversion into a baseband frequency, analog-to-digital conversion, and the like for a reception signal received via antennas, and outputs a conversion result. The GI removal unit 202 removes a GI from a signal output by the radio reception unit 201, and the separation unit 203 separates a signal of transmission signal information multiplexed by the transmitter from the signal from which the GI is removed.

Based on the separated transmission signal information signal, the transmission signal information analysis unit 204 analyzes transmission signal information regarding whether a packet of the received signal is an initial transmission packet or a retransmission packet, which initial transmission packet is retransmitted at the time of a retransmission packet, and the like, and outputs analysis results to the retransmission control unit 215. The FFT unit 205 performs time-to-frequency conversion by a Fourier transform process for a reception packet excluding the transmission signal information separated by the separation unit 203, and generates a frequency domain signal.

The frequency domain signal output from the FFT unit 205 is input to the interference cancellation unit 206. The interference cancellation unit 206 directly outputs the input signal since no replica signal is generated in an initial process for an initial transmission packet.

The propagation channel estimation unit 207 performs propagation channel estimation using the frequency domain signal output from the FFT unit 205, and calculates a propagation channel estimation value. The propagation channel estimation value is input to the interference cancellation unit 206 and the propagation channel compensation unit 208. In this embodiment, the propagation channel estimation value is calculated based on the frequency domain signal output by the FFT unit 205, but the present invention is not limited thereto. The propagation channel estimation value may be calculated based on a time domain signal before an input to the FFT unit 205. For example, a method using a pilot signal including known information between the packet transmission device 1 and the packet reception device 2, or the like may be used as a propagation channel estimation method of the propagation channel estimation unit 207, but other methods may be used.

A signal output by the interference cancellation unit 206 is input to the propagation channel compensation unit 208. The propagation channel compensation unit 208 performs propagation channel compensation for the signal input from the interference cancellation unit 206 by using a weight coefficient using a zero forcing (ZF) criterion, an MMSE criterion, or the like based on the propagation channel estimation value estimated by the propagation channel estimation unit 207. The demodulation unit 209 performs a demodulation process for a signal for which the propagation channel compensation unit 207 performs propagation channel compensation, and calculates a coded bit log likelihood ratio (LLR) indicating likelihood information of each bit constituting the coded bits. The LLR is the log likelihood ratio (probability) of a bit being 1 or 0. Hereafter, for example, the LLR of a bit a is denoted by $\lambda(a)$.

Here, a process of the demodulation unit 209 will be described. Hereinafter, an example of QPSK modulation will be described. A QPSK symbol transmitted from the transmitter is denoted by X and a symbol after propagation channel compensation at the receiver is denoted by Xc. Assuming that bits constituting X are $b_0$ and $b_1$ (bo, $b_1 = \pm 1$), X is expressed by the following Equation (1). In this regard, j represents an imaginary unit. $\lambda(b_0)$ and $\lambda(b_1)$ as LLRs of the bits $b_0$ and $b_1$ from the estimation value Xc at the receiver of X are produced by the following Equation (2). In this regard, Re() represents a real part of a complex number. $\mu$ is an equivalent amplitude after propagation channel compensation. For example, when the propagation channel estimation value in a $k^{th}$ subcarrier is H(k) and the multiplied propagation channel compensation weight of an MMSE criterion is W(k), $\mu$ becomes W(k)H(k). $\lambda(b_1)$ is produced by replacing a real part and an imaginary part of $\lambda(b_0)$.

$$X = \frac{1}{\sqrt{2}}\left(b_0 + jb_1\right) \qquad \cdots (1)$$

$$\lambda(b_0) = \frac{2\mathrm{Re}(X_c)}{\sqrt{2}(1-\mu)} \qquad \cdots (2)$$

The de-interleaving unit 210 performs a de-interleaving process for coded bit LLRs output by the demodulation unit 209. The de-interleaved coded bit LLRs are input to the HARQ processing unit 211, but the input signal is directly output to the signal decoding unit 212 if a reception signal is an initial transmission packet. The combined packet storage unit 242 in the HARQ processing unit 211 stores the input coded bit LLRs (the result after a demodulation process for the initial transmission packet) for combining of HARQ.

The error correction decoding unit 251 (FIG. 5) in the signal decoding unit 212 outputs updated coded bit LLRs by performing an error correction decoding process for coded bit LLRs input to the signal decoding unit 212. The signal decoding unit 212 may include all information bits and all parity bits in the output coded bit LLRs. That is, bits punctured by the puncturing process by the encoding unit 101 in the packet transmission device 1 may be included.

The error detection unit 252 generates decoded bits by performing a hard decision process for information bits of the coded bit LLRs received from the error correction decoding unit 251, and performs an error detection process for the packet to generate error detection information indicating whether or not an error is detected. Also, the error detection unit 252 determines whether to continue or end an iterative process based on the generated error detection information or the like.

If no error is detected, the error detection unit 252 ends the iterative process and outputs the generated decoded bits and the error detection information to the retransmission control unit 215. Upon receipt of error detection information indicating that no error is detected from the packet, the retransmission control unit 215 externally outputs a packet including the input decoded bits and outputs the error detection information to the response signal generation unit 221.

On the other hand, if an error is detected, the error detection unit 252 makes a determination as follows. If the number of iterations of the iterative process does not reach the preset maximum number of iterations, the error detection unit 252 determines to continue the iterative process, and outputs the input coded bit LLRs to the replica signal generation unit 214 and the replica signal packet storage unit 213. If the number of iterations of the iterative process reaches the preset maximum number of iterations, the error detection unit 252 determines to end the iterative process and also outputs and stores the error detection information in the replica signal packet storage unit 213. That is, the replica signal packet storage unit 213 stores LLRs of coded bits as information indicated by a signal of the initial transmission packet.

Upon receipt of error detection information indicating that an error is detected, the retransmission control unit 215 outputs the error detection information to the response signal generation unit 221 so as to make a packet retransmission request to the packet transmission device 1. Here, cyclic redundancy check (CRC) or the like may be used as an error detection method, but the present invention is not limited thereto. A method based on the preset maximum number of iterations has been described as a method of determining whether to continue or end the iterative process, but the present invention is not limited thereto. For example, the determination may be made based on the likelihood of an input coded bit LLR.

Next, the iterative process for the initial transmission packet will be described. The replica signal packet storage unit 213 stores the coded bit LLRs output by the signal decoding unit 212 so as to perform interference cancellation in the initial process for a retransmission packet.

The replica signal generation unit 214 performs the following process to generate a frequency domain replica signal from the coded bit LLRs output by the signal decoding unit 212. The signal selection unit 261 in the replica signal generation unit 214 selects the coded bit LLRs output from the signal decoding unit 212 between the signal decoding unit 212 and the replica signal packet storage unit 213. The puncturing unit 262, the interleaving unit 263, and the modulation unit 264 perform a puncturing process, an interleaving process, and a modulation process based on a puncturing pattern, an interleaving pattern, and a modulation scheme of the initial transmission packet in the packet transmission device 2, and generate a frequency domain replica signal. For example, the case where the process of the modulation unit 264 uses QPSK modulation as the modulation scheme will be described. When LLRs of bits constituting one QPSK modulation symbol are $\lambda(b_0)$ and $\lambda(b_1)$, the modulation unit 264 calculates a replica of the QPSK modulation symbol by using Equation (3). In this regard, j represents an imaginary unit.

$$\frac{1}{\sqrt{2}}\tanh(\lambda(b_0)/2) + \frac{j}{\sqrt{2}}\tanh(\lambda(b_1)/2) \qquad \cdots (3)$$

The generated replica signal is input to the interference cancellation unit 206. The interference signal replica generation unit 231 in the interference cancellation unit 206 generates a frequency-domain interference signal replica from the replica signal and the propagation channel estimation value output by the propagation channel estimation unit 207. A replica of an interference signal of inter-symbol interference (ISI), inter-carrier interference (ICI), multi-code interference (MCI), or the like to a desired signal may be used as an interference signal replica according to this embodiment, but the present invention is not limited thereto. When a replica of ISI is used, an interference signal replica is generated using a transmission signal replica included in all symbols excluding a desired symbol in a time domain. When a replica of ICI is used, an interference signal replica is generated using a transmission signal replica included in all subcarriers excluding a desired subcarrier in the frequency domain.

When MCI is used as the interference signal replica, the packet transmission device 1 has a spreading unit which performs code multiplexing for a transmission signal and the packet reception device 2 has a despreading unit which separates a code-multiplexed signal. At this time, a transmission signal replica included in all code channels excluding a desired code channel is used in the interference signal replica.

The subtraction unit 232 (FIG. 3) subtracts the generated interference signal replica from the reception signal of the initial transmission packet, and outputs the subtraction result to the propagation channel compensation unit 208.

Thereafter, the same process as already described is iterated until the error detection unit 252 determines to end the iterative process. When the error detection unit 252 determines to end the iterative process, the error detection information is output to the response signal generation unit 221. The response signal generation unit 221 generates a response signal of a receipt notification (ACK) or a non-receipt notification (NACK) based on the error detection information received from the retransmission control unit 215. The modulation unit 222 maps the response signal generated by the response signal generation unit 221 to a modulation symbol of QPSK modulation, 16QAM modulation, or the like. The IFFT unit 223 performs frequency-to-time conversion by an IFFT process or the like for the modulation symbol. The GI insertion unit 221 inserts a GI into the frequency-to-time converted signal. The radio transmission unit 225 performs digital-to-analog conversion, frequency conversion, and the like for the signal into which the GI is inserted, and transmits the signal via the antennas.

Next, an operation in which the packet reception device 2 receives a retransmission packet and obtains decoded bits from the retransmission packet by using a signal of the retransmission packet as a desired signal will be described. The radio reception unit 201, the GI removal unit 202, and the separation unit 203 operate in the same way as when the initial transmission packet is received. Based on the transmission signal information separated by the separation unit 203, the transmission signal information analysis unit 204 identifies that a reception signal from which the transmission signal information is separated is the signal of the retransmission packet. The retransmission control unit 215 receiving an identification result generates retransmission control information for processing the reception signal as the retransmission packet, and outputs the retransmission control information to the interference cancellation unit 206, the replica signal packet storage unit 213, the replica signal generation unit 214, and the HARQ processing unit 211. For example, the retransmission control information includes signal information which designates coding rates or puncturing patterns of the initial transmission packet and the retransmission packet, control information for performing combining of HARQ, and the like.

The frequency domain signal output from the FFT unit 205 is input to the propagation channel estimation unit 207 and the interference cancellation unit 206. The propagation channel estimation unit 207 performs propagation channel estimation using the signal output from the FFT unit 205, and outputs a propagation channel estimation value to the interference cancellation unit 206 and the propagation channel compensation unit 207.

On the other hand, the replica signal packet storage unit 213 outputs coded bit LLRs of the stored initial transmission packet to the replica signal generation unit 214 based on the retransmission control information from the retransmission control unit 215. For example, the output coded bit LLRs may use the processing result of any number of iterations such as the processing result in which the number of iterations is maximal, the processing result in which the sum of all bits of absolute values of coded bit LLRs is maximal, or the like among iterative processes for the initial transmission packet.

The replica signal generation unit 214 receives the coded bit LLRs of the initial transmission packet stored by the replica signal packet storage unit 213 and the retransmission control information from the retransmission control unit 215, cancels interference to a signal of a retransmission packet from a received signal using the received LLRs and information, and generates a frequency domain replica signal (a priori information or a transmission signal replica) for detecting the signal of the retransmission packet. Thus, the signal selection unit 261 (FIG. 6) in the replica signal generation unit 214 selects and outputs the coded bit LLRs of the initial transmission packet from the replica signal packet storage unit 213. The puncturing unit 262 performs a puncturing process for the coded bit LLRs from the signal selection unit 261 by a puncturing pattern of the retransmission packet designated by the retransmission control information.

The interleaving unit 263 performs an interleaving process for the processing result of the puncturing unit 262 by applying an interleaving pattern of the retransmission packet designated by the retransmission control information. The modulation unit 264 maps the processing result of the interleaving unit 263 to a modulation symbol of a modulation scheme of the retransmission packet designated by the retransmission control information, and outputs the modulation symbol to the interference cancellation unit 206. As described above, a signal replica of the retransmission packet can be generated by processing the coded bit LLRs detected from the initial transmission packet in a preset method, that is, by performing the puncturing process by the puncturing pattern of the retransmission packet, the interleaving process by the interleaving pattern of the retransmission packet, and the modulation process of mapping to the modulation symbol of the modulation scheme of the retransmission packet.

In the initial process for the retransmission packet, the interference cancellation unit 206 performs interference cancellation for the signal of the retransmission packet by using the replica signal of the retransmission packet generated by the replica signal generation unit 214 based on the coded bit LLRs obtained from the initial transmission packet as described above. The interference signal replica generation unit 206 generates a frequency-domain interference signal replica to the retransmission packet from the replica signal generated by the replica signal generation unit 214 from the initial transmission packet and the propagation channel estimation value obtained by the propagation channel estimation value 207 from the retransmission packet. The subtraction unit 232 performs interference cancellation by subtracting the generated interference signal replica from the reception signal.

The propagation channel compensation unit 208 performs propagation channel compensation for a signal interference-cancelled by the interference cancellation unit 206 by using a weight coefficient using a ZF criterion, an MMSE criterion, or the like based on the propagation channel estimation value estimated by the propagation channel estimation unit 207. The demodulation unit 209 performs a demodulation process for a signal propagation channel compensated by the propagation channel compensation unit 208, and calculates coded bit LLRs. As described above, the signal detection unit 217 including the interference cancellation unit 206, the propagation channel compensation unit 208, and the demodulation unit 209 detects the retransmission packet as a desired signal from the frequency domain signal output by the FFT unit 205 by using the replica signal (a priori information) of the retransmission packet generated by the replica signal generation unit 214.

The de-interleaving unit 210 performs a de-interleaving process for the coded bit LLRs output by the demodulation unit 209, and inputs the processing result to the HARQ processing unit 211. The coded bit LLRs of the retransmission packet and the retransmission control information output by the retransmission control unit 215 are input to the HARQ processing unit 211. The combined packet storage unit 242 (FIG. 4) in the HARQ processing unit 211 outputs the stored coded bit LLRs obtained by the initial process for the initial transmission packet to the packet combining unit 241 based on the retransmission control information.

The packet combining unit 241 combines the coded bit LLRs of the retransmission packet with the coded bit LLRs output by the combined packet storage unit 242 based on the retransmission control information, and outputs the coded bit LLRs of a combining result to the signal decoding unit 212. Here, for example, in the case of retransmission by CC as a combining method in the packet combining unit 241, it is preferable to respectively add and combine corresponding coded bit LLRs to each other. In the case of retransmission by IR, it is preferable to perform the de-puncturing process for the coded bit LLRs of the respective packets from the combined packet storage unit 242 and the de-interleaving unit 210 and respectively add and combine corresponding coded bit LLRs to each other after the de-puncturing process.

The error correction decoding unit 251 (FIG. 5) outputs the coded bit LLRs updated by an error correction decoding process for the coded bit LLRs input to the signal decoding unit 212. First, the error detection unit 252 generates decoded bits by performing a hard decision process for information bits among the coded bit LLRs from the error correction decoding unit 251, performs an error detection process for the packet, and generates error detection information. Based on the generated error detection information or the like, the error detection unit 252 determines whether to continue or end the iterative process.

If no error is detected in the error detection unit 252, the error detection unit 252 determines to end the iterative process, and outputs error detection information indicating that no error is detected and the decoded bits to the retransmission control unit 215. Upon receipt of the error detection information indicating that no error is detected, the retransmission control unit 215 externally outputs the input decoded bits and outputs the error detection information thereof to the response signal generation unit 221.

On the other hand, if an error is detected in the error detection unit 252, the error detection unit 252 makes a determination as follows. If the number of iterations of the iterative process does not reach the preset maximum number of iterations, the error detection unit 252 determines to continue the iterative process, and outputs the coded bit LLRs to the replica signal generation unit 214 and the replica signal packet storage unit 213. If the number of iterations of the iterative process reaches the preset maximum number of iterations, the error detection unit 252 determines to end the iterative process, and outputs error detection information indicating that the error is detected to the retransmission control unit 215. At this time, the error detection unit 252 outputs the coded bit LLRs received from the error correction decoding unit 251 to the replica signal packet storage unit 213, and causes the replica signal packet storage unit 213 to store the coded bit LLRs. Upon receipt of the error detection information indicating that the error is detected, the retransmission control unit 215 outputs the error detection information to the response signal generation unit 221 so as to request the packet transmission device 1 to retransmit the packet.

Hereinafter, an iterative process when an error is detected from the result of error correction decoding of data (coded bit LLRs) obtained by combining a demodulation result of the initial transmission packet with a demodulation result of the retransmission packet will be described.

The replica signal generation unit 214 performs the following process to generate a frequency domain replica signal from the coded bit LLRs output by the signal decoding unit 212. The signal selection unit 261 (FIG. 6) selects the coded bit LLRs from the signal decoding unit 212. Based on the retransmission control information, the puncturing unit 262, the interleaving unit 263, and the modulation unit 264 perform a puncturing process, an interleaving process, and a modulation process by the puncturing pattern, the interleaving pattern, and the modulation scheme of the retransmission packet, and generate a replica signal of the retransmission packet.

The replica signal generated by the replica signal generation unit 214 is input to the interference cancellation unit 206. The interference signal replica generation unit 231 (FIG. 3) in the interference cancellation unit 206 generates a frequency-domain interference signal replica from the replica signal generated by the replica signal generation unit 214 and the propagation channel estimation value output by the propagation channel estimation unit 207. The subtraction unit 232 subtracts the interference signal replica generated by the interference signal replica generation unit 231 from the frequency domain signal of the retransmission packet received from the FFT unit 205, and outputs the subtraction result to the propagation channel compensation unit 208. Thereafter, the already described process is iterated until the error detection unit 252 (FIG. 5) determines to end the iterative process.

If the error detection unit 252 determines to end the iterative process, the error detection unit 252 outputs the error detection information to the response signal generation unit 221 via the retransmission control unit 215. The response signal generation unit 221 generates a response signal of a receipt notification (ACK) or a non-receipt notification (NACK) based on the error detection information output from the retransmission control unit 215. The modulation unit 222 maps the response signal to a modulation symbol of QPSK, 16QAM, or the like. The IFFT unit 223 performs frequency-to-time conversion by an IFFT process or the like for the modulation symbol mapped by the modulation unit 222, and generates a time domain signal. The GI insertion unit 224 inserts a GI into the frequency-to-time converted time domain signal. The radio transmission unit 225 performs digital-to-analog conversion, frequency conversion, and the like for the signal into which the GI is inserted, and transmits the signal via the antennas. The packet reception device 2 iterates the above process until a packet is received with no error (no error is detected in error detection) or a determination is made to end the retransmission process by the number of retransmissions of the retransmission packet reaching the preset maximum number of iterations.

If the packet reception device 2, which performs an iterative process using a frequency domain interference canceller, receives a retransmission packet in a communication system using HARQ in this embodiment, the reliability of interference cancellation for the retransmission packet can be improved by performing interference cancellation of an initial process for the retransmission packet by using a replica signal generated by an initial transmission packet, and the number of retransmissions and the number of iterative processes can be reduced.

The case where the replica signal generation unit 214 generates a replica signal of the retransmission packet based on coded bit LLRs of the initial transmission packet stored by the replica signal packet storage unit 213, and the signal detection unit 217 detects the retransmission packet from a received signal by performing interference cancellation using the replica signal, so as to remove interference between signals constituting the retransmission packet has been described above, but the replica signal of the retransmission packet may be used when the received signal is a signal into which the retransmission packet and another desired packet are multiplexed to interfere with each other and the signal detection unit 217 detects a signal of the desired packet.

Thereby, the number of retransmissions related to a desired packet and the number of iterative processes can be reduced since the reliability of interference cancellation for the desired packet is improved and error detection frequency in error detection for the desired packet is suppressed.

Coded bit LLRs stored by the replica signal packet storage unit 213 are respectively LLRs for all bits obtained by error-correction coding information bits in the above description. As described above, a replica of the retransmission packet is generated by generating a replica by a puncturing process, an interleaving process, and a modulation process for the coded bit LLRs. However, when the coded bit LLRs stored by the replica signal packet storage unit 213 are LLRs for some bits of the coded bits, for example, only information bits, it is possible to generate a replica by the puncturing process, the interleaving process, and the modulation process after the stored coded bit LLRs are error correction coded to calculate LLRs for all bits.

A replica signal is generated using the initial transmission packet in an initial process for a retransmission packet and interference cancellation is performed in the above description, but the present invention is not limited thereto.

For example, when the packet reception device 2 receives at least one retransmission packet, it is possible to store all reception packets including even the initial transmission packet, generate a replica signal using a packet selected from the reception packets, and perform interference cancellation, and it is possible to generate a replica signal using a packet in which at least two packets of the reception packets are combined, and perform interference cancellation. Also, it is possible to store all reception packets including even the initial transmission packet and generate a replica signal using the result of error correction decoding of a packet in which at least two packets of the reception packets are combined.

Coded bit LLRs obtained by the initial process in the above description are used for the initial transmission packet to be combined with a retransmission packet in the HARQ processing unit 211 in the above description, but the present invention is not limited thereto. For example, coded bit LLRs obtained by the last iterative process may be used. Alternatively, any of coded bit LLRs obtained by the respective iterative processes may be used. For example, a coded bit LLR having the highest likelihood may be used.

The same coded bit LLRs are used for the initial transmission packet to be combined in all the iterative processes in the HARQ processing unit 211 in the above description, but the present invention is not limited thereto. For example, the combined packet storage unit 242 may store all coded bit LLRs obtained by the respective iterative processes for the initial transmission packet, and different coded bit LLRs may be combined in each iterative process when a retransmission packet is received.

The case where the packet reception device 2 performs an iterative process has been described above, but the present invention is not limited thereto and is applicable even to a packet reception device which does not perform the iterative process. That is, even in the packet reception device which does not perform the iterative process, it is preferable to generate a replica of a retransmission packet by using coded bit LLRs obtained by the initial transmission packet and remove an interference component of the retransmission packet.

The case where the combining process is performed in all iterative processes in the HARQ processing unit 211 has been described above, but the present invention is not limited thereto. For example, at least one combining process may not be performed among iterative processes. The packet reception device 2 may not have the HARQ processing unit 211, and the signal decoding unit 212 may receive coded bit LLRs output by the de-interleaving unit 210.

A process of combining two packets when the packet reception device 2 receives an initial transmission packet and then requests the packet transmission device 1 to perform retransmission by a non-receipt notification (NACK) and the packet reception device 2 receives a retransmission packet has been described above, but the present invention is not limited thereto. For example, if at least two retransmission packets are received, results after demodulation processes for all received packets may be combined and results after demodulation processes for at least two packets among all received packets may be combined.

The case where a retransmission packet is used as a reception signal for which interference cancellation is performed in an iterative process when an error is detected in the result of error correction decoding of data obtained by combining a demodulation result of an initial transmission packet with a demodulation result of the retransmission packet after the retransmission packet is received has been described above, but the present invention is not limited thereto. The initial transmission packet may be used as the reception signal for which interference cancellation is performed in the iterative process. At this time, this may be implemented by providing a reception signal storage unit before the interference cancellation unit 206 and storing the initial transmission packet in the reception signal storage unit.

The case of using a multicarrier signal as a transmission/reception signal has been described above, but a single carrier signal may be used. The case where the interleaving units 102 and 263 and the de-interleaving unit 210 are used has been described above, but these may not be used.

The case of using the packet reception device 2 as a communication device which performs an iterative process using a frequency domain interference canceller has been described above, but the configuration of the packet reception device 2 of this embodiment may also be applicable to a communication device which performs the iterative process using a time domain interference canceller.

The configuration of the packet reception device 2 of this embodiment may also be applicable to a communication device using a frequency domain soft canceller followed by a minimum mean squared error filter (SC/MMSE) type of turbo equalization or a time domain SC/MMSE type of turbo equalization. It is also applicable to a communication device which performs stream separation upon multi-input multi-output (MIMO) transmission. When the stream separation upon MIMO transmission is performed, the communication device has a stream separation unit which respectively separates spatially multiplexed streams.

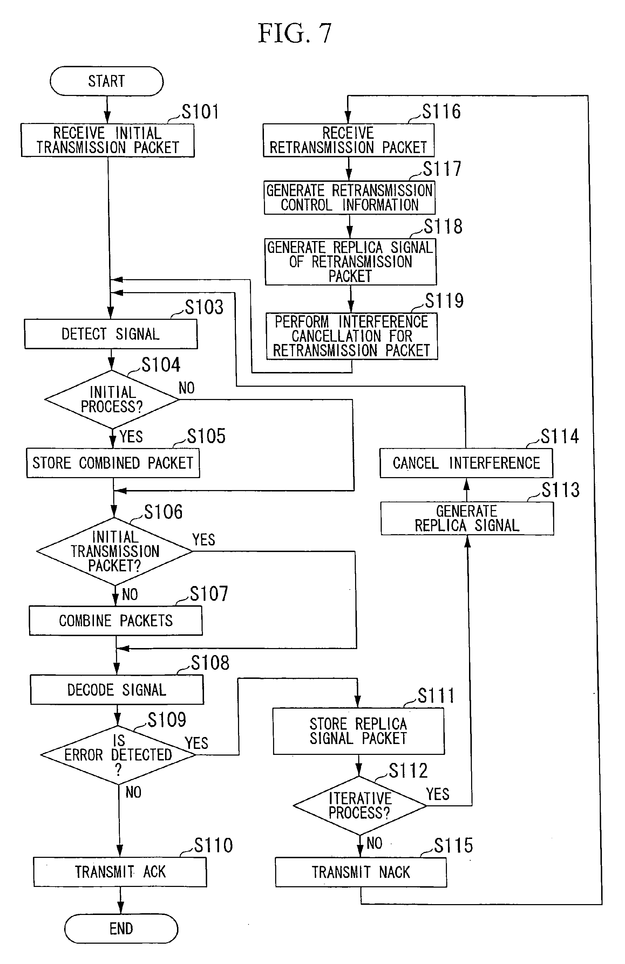

FIG. 7 is a flowchart illustrating the operation of the packet reception device 2 in this embodiment. In step S101, the packet reception device 2 receives a signal including an initial transmission packet. If a corresponding packet is the initial transmission packet and is subjected to an initial process, propagation channel compensation based on an estimated propagation channel estimation value, demodulation, and signal detection for the initial transmission packet received in step S101 are performed in step S103. In step S104, it is determined whether the iterative process is the initial process or not. If the iterative process is not the initial process, step S105 is skipped. In the case of the initial process, coded bit LLRs of the packet for HARQ combining to be described later are stored in step S105.

In step S106, it is determined whether the corresponding packet is the initial transmission packet or not. In the case of the initial transmission packet, step S107 is skipped. If the corresponding packet is not the initial transmission packet, a HARQ combining process of combining the coded bit LLRs stored in step S105 with coded bit LLRs of the corresponding packet is performed in step S107. In step S108, error correction decoding is performed. In step S109, it is determined whether there is an error in the corresponding packet or not. When the error is detected, coded bit LLRs of the initial transmission packet obtained in step S108 are stored so that interference cancellation is performed in the initial process for the retransmission packet in step S111.

In step S112, it is determined whether the iterative process is performed for the packet or not. If the iterative process is performed, a replica signal of the initial transmission packet is generated from the coded bit LLRs obtained in step S108 so that interference cancellation to be described later is performed in step S113. In step S114, an interference replica signal is generated from the replica signal generated in step S 113 so that an interference component is cancelled from the initial transmission packet, and interference cancellation is performed. In step S103, in the case of the iterative process, signal detection is performed based on the initial transmission packet from which the interference is cancelled in step S113. Thereafter, the iterative process is performed until no error is detected in step S109 or a determination is made to end the iterative process in step S 112.

If an error is detected in step S109 and the iterative process is ended in step S 112, a non-receipt notification (NACK) is transmitted to the packet transmission device 1 and a retransmission request is made in step S115. In step S116, the packet reception device 2 receives a retransmission packet. In step S117, retransmission control information for processing the retransmission packet is generated. In step S118, a replica signal of the retransmission packet is generated using the coded bit LLRs obtained from the initial transmission packet stored in step S111. In step S119, interference cancellation of the retransmission packet is performed using the replica signal of the retransmission packet generated in step S118. Thereafter, the retransmission packet is processed as the reception signal in the same process as that for the initial transmission packet until no error is detected in step S109. If no error is detected in step S109, a receipt notification (ACK) is transmitted to the packet transmission device 1 and the process is ended in step S110.

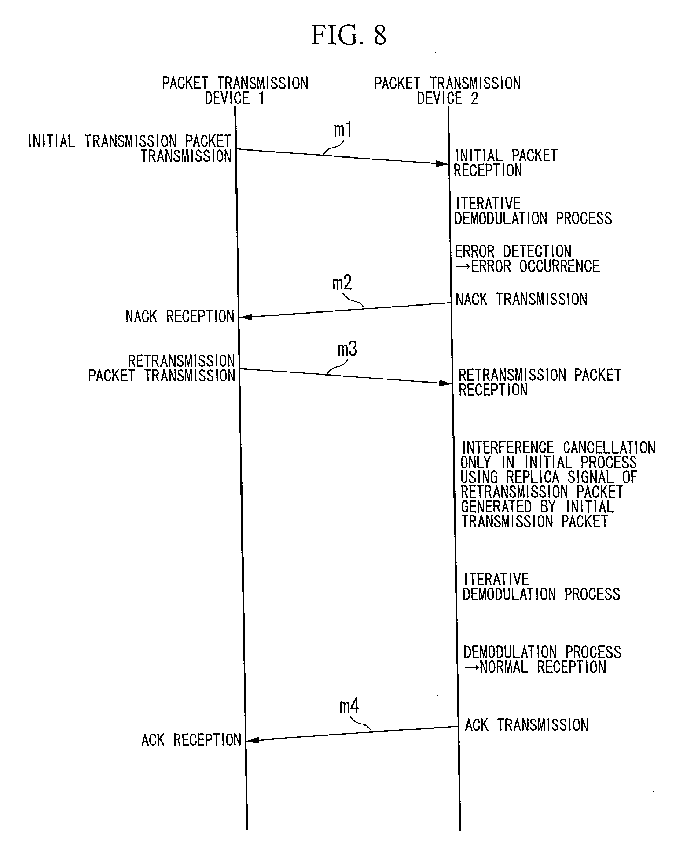

FIG. 8 is a sequence diagram showing an operation example of the packet transmission device 1 and the packet reception device 2 in this embodiment. For example, FIG. 8 shows the case where the packet reception device 2 detects an error from an initial transmission packet and normally receives a retransmission packet without error detection. First, the packet transmission device 1 transmits an initial transmission packet (m1), and the packet reception device 2 receives the initial transmission packet. The packet reception device 2 performs a reception process by the iterative process such as interference cancellation or the like. As a result, if an error is detected, a non-receipt notification (NACK) is transmitted as a response signal to the packet transmission device 1 (m2), and makes a retransmission request.

When the non-receipt notification (NACK) is received from the packet reception device 2, the packet transmission device 1 transmits a retransmission packet to the packet reception device 2 (m3). The packet reception device 2 receives the retransmission packet and performs the reception process once again. In the reception process, interference cancellation is performed using a replica signal obtained from the initial transmission packet received in sequence m1 in the initial process of the iterative process. Since no error is detected as the result of the reception process by the iterative process, the packet transmission device 1 transmits the receipt notification (ACK) as the response signal to the packet transmission device 1 (m4). The packet transmission device 1 receives the receipt notification (ACK) from the packet reception device 2 and ends the process.

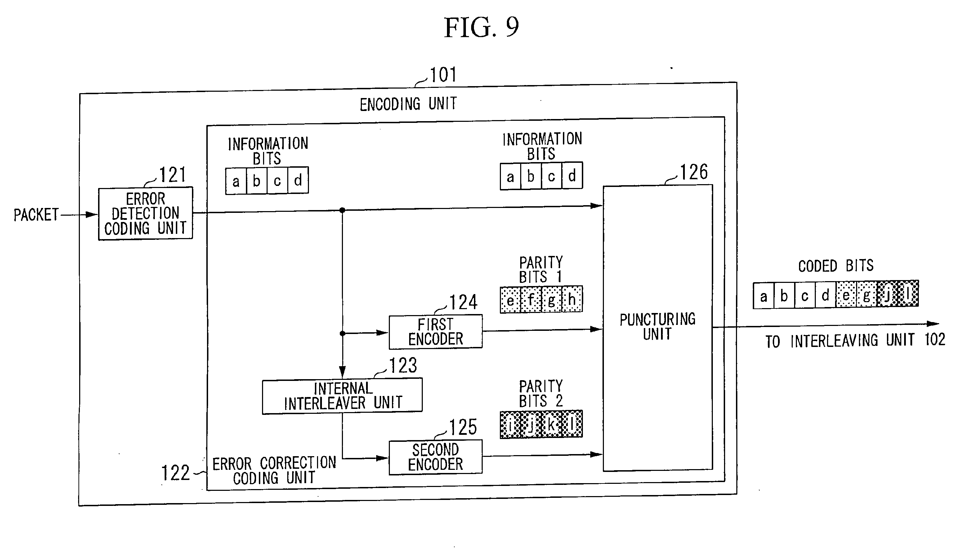

A coding process to be performed by the encoding unit 101 and a decoding process to be performed by the error correction decoding unit 251 in the signal decoding unit 212 will be described. FIG. 9 is a schematic block diagram showing the configuration of the encoding unit 101 in the packet transmission device 1. The encoding unit 101 has an error detection coding unit 121 and an error correction coding unit 122. The error detection coding unit 121 carries out a CRC calculation for an input packet, and outputs input packet bits and calculated CRC bits as information bits. The error correction coding unit 122 receives the information bits, performs error correction coding thereof, and generates coded bits.

FIG. 9 shows the case where a turbo code is used as an example of an error correction coding process by the error correction coding unit 122. The error correction coding unit 122 includes an internal interleaver unit 123, a first encoder 124, a second encoder 125, and a puncturing unit 126. For example, if transmission information bits (including parity bits by an error correction code) input to the error correction coding unit 122 are four bits of information bits a to d, the first encoder 124 generates first parity bits e to h by converting the information bits a to d. The second encoder 125 receiving an input of the result of rearranging a bit stream of the information bits a to d by the internal interleaver unit 123 generates second parity bits i to 1 by converting the input.

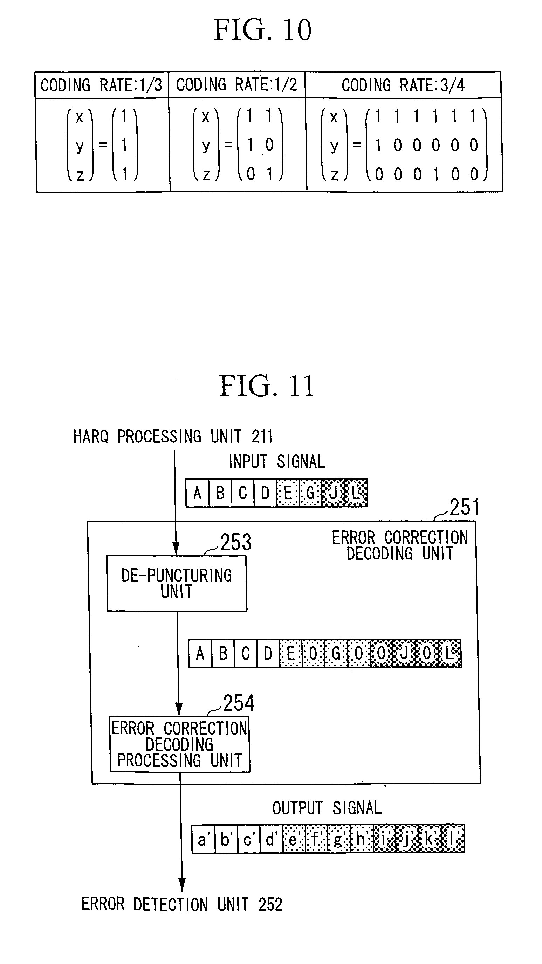

The puncturing unit 126 performs a puncturing process for a bit stream in which the information bits, the first parity bits, and the second bits are connected. That is, the puncturing unit 126 performs the puncturing process to puncture some bits from the information bits and the parity bits obtained by the coding process and changes the coding rate. For example, patterns shown in FIG. 10 are available as a puncturing pattern used in the puncturing process. For example, puncturing patterns of coding rates of 1/3, 1/2, and 3/4 are shown in FIG. 10.

In FIG. 10, x, y, and z respectively denote the information bits, the first parity bits, and the second parity bits, and 1 or 0 indicates a transmission bit (remaining bit) or a non-transmission bit (punctured bit).

For example, since x, y, and z are all 1 in the case of the puncturing pattern in which the coding rate is 1/3, the puncturing unit 126 outputs all information bits, first puncture bits, and second puncture bits. In the puncturing pattern in which the coding rate is 1/2, the puncturing unit 126 outputs all the information bits since x is "11," outputs the rest obtained by puncturing an even bit corresponding to "0" in the first puncture bits since the second is "0" if y is "10," and outputs the rest obtained by puncturing an odd bit corresponding to "0" in the second puncture bits since the first is "0" if z is "01."

In the case of the puncturing pattern in which the coding rate is 3/4, the puncturing unit 126 outputs all information bits since x is "111111," outputs only a first bit every 6 bits in the first puncture bits since only the first bit is "1" if y is "100000," and outputs only a fourth bit every 6 bits in the second puncture bits since only the fourth bit is "1" if z is "000100." In the example shown in FIG. 9, since 8 coded bits a, b, c, d, e, g, j, and 1 are obtained by performing a puncturing process for bits in which the information bits a to d, the first parity bits e to h, and the second parity bits i to 1 are connected and puncturing four bits f, h, i, and k, an example in which the coding rate of FIG. 10 is 1/2 is shown.

FIG. 11 is a schematic block diagram showing the configuration of the error correction decoding unit 251 when CC is used in HARQ. The error correction decoding unit 251 has a de-puncturing unit 253 and an error correction decoding processing unit 254. Here, a decoding process when a turbo code is used as an error correction code is shown. It is assumed that coded bit LLRs output by the HARQ processing unit 211 are A, B, C, D, E, G, J, and L. First, a de-puncturing process is performed by the de-puncturing unit 253. That is, the de-puncturing unit 253 sets the number of bits before the puncturing process by inserting initial values (virtual values) into positions of bits punctured by the puncturing process. For example, if zero is used as an initial value, the de-puncturing unit 253 outputs a coded bit LLR stream of A, B, C, D, E, 0, G, 0, 0, J, 0, and L when an input is a coded bit LLR stream of A, B, C, D, E, G, J, and L. The error correction decoding processing unit 254 performs an error correction decoding process for de-punctured bits, and generates and outputs coded bit LLRs of information bits, first parity bits, and second parity bits.

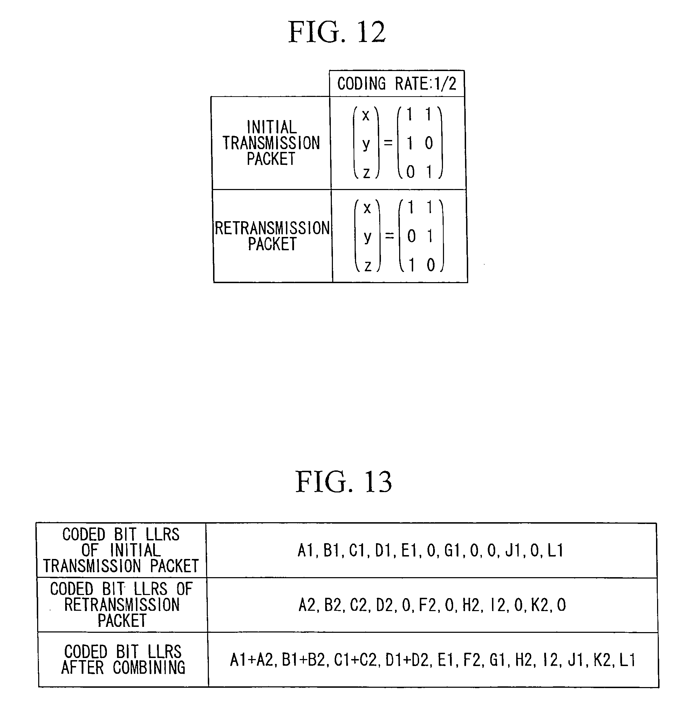

When IR is used in HARQ, it is necessary to perform a de-puncturing process by the above-described de-puncturing unit 253 for respective coded bit LLRs of a combining target before a packet combining process by the packet combining unit 241. Here, the case of combining coded bit LLRs of the initial transmission packet and the retransmission packet will be described. At this time, an example of a used puncturing pattern is shown in FIG. 12. In the example of the puncturing pattern shown in FIG. 12, in the initial transmission packet, information bits are not punctured, an even bit of the first parity bits is punctured, and an odd bit of the second parity bits is punctured. Also, in the retransmission packet, information bits are not punctured, an odd bit of the first parity bits is punctured, and an even bit of the second parity bits is punctured.

FIG. 13 shows an example of a combining process by the packet combining unit 241 when the puncturing pattern shown in FIG. 12 is used. Here, it is assumed that coded bit LLRs A1, B1, C1, D1, E1, G1, J1, and L1 of the initial transmission packet from the combined packet storage unit 242 and coded bit LLRs A2, B2, C2, D2, F2, H2, I2, and K2 of the retransmission packet from the de-interleaving unit 210 are input to the packet combining unit 241. First, the packet combining unit 241 performs the de-puncturing process for respective coded bit LLRs from the de-interleaving unit 210 and the combined packet storage unit 242, and converts the coded bit LLRs into coded bit LLRs A1, B1, C1, D1, E1, 0, G1, 0, 0, J1, 0, and L1 and coded bits LLRs A2, B2, C2, D2, 0, F2, 0, H2, I2, 0, K2, and 0.

Thereafter, the packet combining unit 241 generates and outputs coded bit LLRs A1+A2, B1+B2, C1+C2, D1+D2, E1, F2, G1, H2, I2, J1, K2, and L1 by adding and combining the coded bit LLRs for which the de-puncturing process is performed. In the case of using the CC in HARQ like the case of using the IR in HARQ, the de-puncturing process may be performed before the packet combining process by the packet combining unit 241.

[Second Embodiment]

In this embodiment, a method of reducing the number of retransmissions and the number of iterative processes by performing a signal detection process of an initial process for a retransmission packet by using a priori information generated from an initial transmission packet if a packet reception device 4 which performs an iterative process using turbo equalization receives a retransmission packet in a communication system using HARQ will be described.

A packet transmission device 1 according to this embodiment has the same configuration as the packet transmission device 1 shown in FIG. 1. The packet reception device 4 according to this embodiment is different from the packet reception device 2 according to the first embodiment shown in FIG. 2 in that a desired signal is detected using turbo equalization, not an interference canceller.

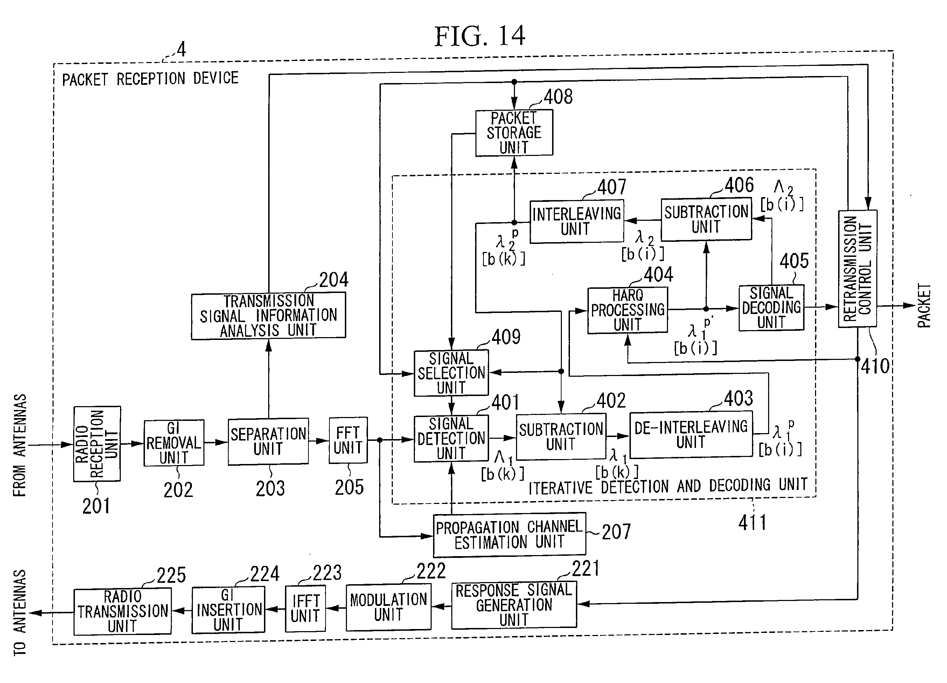

FIG. 14 is a schematic block diagram showing the configuration of the packet reception device 4 according to this embodiment.

In FIG. 14, the same reference symbols are assigned to parts 201 to 205, 207, and 221 to 225 corresponding to those of FIG. 2, and description thereof is omitted.

According to this embodiment, the packet reception device 4 includes a radio reception unit 201, a GI removal unit 202, a separation unit 203, a transmission signal information analysis unit 204, an FFT unit 205, a propagation channel estimation unit 207, a response signal generation unit 221, a modulation unit 222, an IFFT unit 223, a GI insertion unit 224, a radio transmission unit 225, a signal detection unit 401, a subtraction unit 402, a de-interleaving unit 403, a HARQ processing unit 404, a signal decoding unit 405, a subtraction unit 406, an interleaving unit 407, a packet storage unit 408, a signal selection unit 409, and a retransmission control unit 410. The signal detection unit 401, the subtraction unit 402, the de-interleaving unit 403, the HARQ processing unit 404, the signal decoding unit 405, the subtraction unit 406, the interleaving unit 407, and the signal selection unit 409 function as an iterative detection and decoding unit 411.

Hereinafter, the operation when the packet reception device 4 receives an initial transmission packet will be described. First, an initial process for the initial transmission packet will be described. The radio reception unit 201, the GI removal unit 202, the separation unit 203, the transmission signal information analysis unit 204, and the FFT unit 205 perform the same operations as those of the packet reception device 2. A frequency domain signal output by the FFT unit 205 is input to the signal detection unit 401 and the propagation channel estimation unit 207. The signal detection unit 401 calculates an a posteriori LLR (a posteriori information) $A_1[b(k)]$ of each coded bit by Equation (4) when a reception signal vector r(t) is given. Here, b(k) denotes a transmission signal after the interleaving unit 102 (FIG. 1) in the packet transmission device 1 performs the interleaving process. Pr[b(k)|r(t)] denotes a conditional probability, which is an actually transmitted code b(k) when r(t) is received.

$$\Lambda_1[b(k)] = \log \frac{\Pr[b(k) = +1 \,|\, r(t)]}{\Pr[b(k) = -1 \,|\, r(t)]} \qquad \cdots (4)$$

The subtraction unit 402 subtracts an a priori LLR $\lambda_2{}^p[b(k)]$ as a priori information from the a posteriori LLR $A_1[b(k)]$ from the signal detection unit 401. The a posteriori LLR $A_1[b(k)]$ can be expressed by Equation (5) from Bayes' theorem. If a reception vector r(t) and an a priori LLR $\lambda_2{}^p[b(k')]$ (where k'=k) are known, an external LLR $\lambda_1[b(k)]$ and the a priori LLR $\lambda_2{}^p[b(k)]$ are expressed by Equation (6). Accordingly, since $A_1[b(k)]$ becomes the sum of the external LLR $\lambda_1[b(k)]$ and the a priori LLR $\lambda_2{}^p[b(k)]$, the output of the subtraction unit 303 obtained by subtracting $\lambda_2{}^p[b(k)]$ from $A_1[b(k)]$ becomes the external LLR $\lambda_1[b(k)]$. In this regard, since the output of the interleaving unit 407, that is, $\lambda_2{}^p[b(k)]$, is equal to 0 at the time of the initial process, the subtraction unit 402 directly outputs the a posteriori LLR $A_1[b(k)]$ as the external LLR $\lambda_1[b(k)]$.

$$\Lambda_1[b(k)] = \log \frac{\Pr[r(t) \,|\, b(k) = +1]}{\Pr[r(t) \,|\, b(k) = -1]} + \log \frac{\Pr[b(k) = +1]}{\Pr[b(k) = -1]} \qquad \cdots (5)$$

$$\lambda_1[b(k)] = \log \frac{\Pr[r(t) \,|\, b(k) = +1]}{\Pr[r(t) \,|\, b(k) = -1]}$$

$$\lambda_2^p[b(k)] = \log \frac{\Pr[b(k) = +1]}{\Pr[b(k) = -1]} \qquad \cdots (6)$$

The de-interleaving unit 403 performs a de-interleaving process for the external LLR $\lambda_1[b(k)]$, and outputs an a priori LLR $\lambda_1{}^p[b(i)]$ to the signal decoding unit 405. Here, b(i) denotes an $i^{th}$ bit value before the interleaving unit 102 (FIG. 1) in the packet transmission device 1 performs the interleaving process.

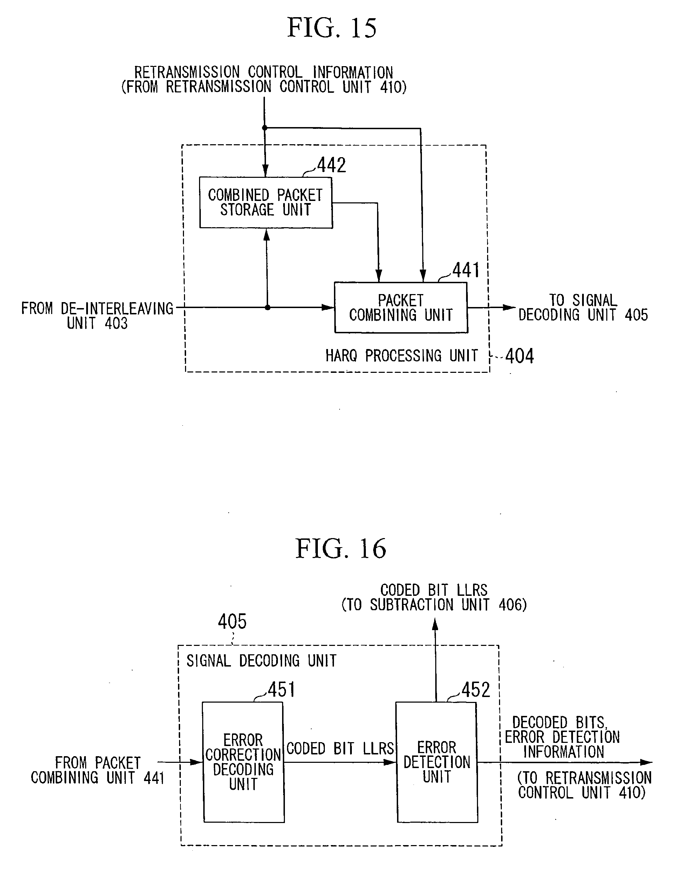

FIG. 15 is a schematic block diagram showing the configuration of the HARQ processing unit 404. The HARQ processing unit 404 includes a packet combining unit 441 and a combined packet storage unit 442. The combined packet storage unit 442 stores the input a priori LLR $\lambda_1{}^p[b(i)]$. The packet combining unit 441 outputs an a priori LLR $\lambda_1{}^{p'}[b(i)]$ after combining by combining the a priori LLR stored by the combined packet storage unit 442 with the a priori LLR output by the de-interleaving unit 403. In the case of the initial transmission packet, the a priori LLR $\lambda_1{}^p[b(i)]$ output by the de-interleaving unit 403 is directly output as the a priori LLR $\lambda_1{}^{p'}[b(i)]$ after combining.

FIG. 16 is a schematic block diagram showing the configuration of the signal decoding unit 405. The signal decoding unit 405 includes an error correction decoding unit 451 and an error detection unit 452. In the signal decoding unit 405, first, the error correction decoding unit 451 performs an error correction decoding process for the a priori LLR $\lambda_1{}^{p'}[b(i)]$ after combining, and calculates an a posteriori LLR $\Lambda_2[b(i)]$ shown in Equation (7). Here, M denotes a frame length.

$$\Lambda_2[b(i)] = \log \frac{\Pr[b(i) = +1 \,|\, \{\lambda_1^{p'}[b(i)]\}_{i=0}^{M-1}]}{\Pr[b(i) = -1 \,|\, \{\lambda_1^{p'}[b(i)]\}_{i=0}^{M-1}]} \qquad \cdots (7)$$

The error detection unit 452 performs error detection by a hard decision or the like for an information bit of the a posteriori LLR $\Lambda_2[b(i)]$ calculated by the error correction decoding unit 451. When no error is detected, the signal detection unit 452 ends the iterative process of the iterative detection and decoding unit 411, and outputs decoded bits and error detection information as a hard decision result to the retransmission control unit 410. When an error is detected, the a posteriori LLR $\Lambda_2[b(i)]$ is output to the subtraction unit 406 so that the iterative process of the iterative detection and decoding unit 411 is performed.

Next, the iterative process for the initial transmission packet will be described. If an error is detected as described above, the error detection unit 452 in the signal decoding unit 405 outputs the a posteriori LLR $\Lambda_2[b(i)]$ calculated by the error correction decoding unit 451 to the subtraction unit 406 shown in FIG. 14. The subtraction unit 406 subtracts the a priori LLR $\lambda_1{}^{p'}[b(i)]$ after combining output by the HARQ processing unit 404 from the a posteriori LLR $\Lambda_2[b(i)]$. Here, the a posteriori LLR $\Lambda_2[b(i)]$ can be expressed by Equation (8) from Bayes' theorem. $\lambda_2[b(i)]$ is also referred to as an external LLR (external information), and an a priori LLR $\lambda_1{}^{p'}[b(i')]$ is expressed as information of b(i) obtained from a trellis structure of an error correction code.

$$\Lambda_2[b(i)] = \lambda_2[b(i)] + \lambda_1^{p'}[b(i)] \qquad \cdots (8)$$

Consequently, the subtraction unit 406 outputs the external LLR $\lambda_2[b(i)]$ by subtracting $\lambda_1{}^{p'}[b(i)]$ as an a priori LLR after combining from the a posteriori LLR $\Lambda_2[b(i)]$. The interleaving unit 407 performs an interleaving process for the external LLR $\lambda_2[b(i)]$, and outputs an a priori LLR $\lambda_2{}^p[b(k)]$ (a priori information) to the packet storage unit 408, the signal selection unit 409, and the subtraction unit 402. The packet storage unit 408 stores the a priori LLR $\lambda_2{}^p[b(k)]$.

The signal selection unit 409 selects either the output in the interleaving unit 407 or the output of the packet storage unit 408 based on the retransmission control information and the number of iterations of the iterative process from the retransmission control unit 410. Here, since the retransmission control information from the retransmission control unit 410 indicates that a processing target is an initial transmission packet, the a priori LLR $\lambda_2{}^p[b(k)]$ output by the interleaving unit 407 is selected and output to the signal detection unit 401, regardless of the number of iterations. The signal detection unit 401 calculates an a posteriori LLR $A_1[b(k)]$ based on the input a priori LLR $\lambda_2{}^p[b(k)]$ and the frequency domain signal from the FFT unit 205. Thereafter, the above-described process of the iterative detection and decoding unit 411 is iterated until the error detection unit 452 (FIG. 16) in the signal decoding unit 405 determines to end the iterative process in the case where no error is detected, the case where the number of iterations reaches the preset maximum number of iterations, or the like.

Next, the case where the packet reception device 2 receives a retransmission packet will be described. The radio reception unit 201, the GI removal unit 202, the separation unit 203, and the FFT unit 205 operate as at the time of the initial transmission packet. If the transmission signal information analysis unit 204 identifies that a reception signal is a retransmission packet based on transmission signal information separated by the separation unit 203, the retransmission control unit 410 receiving an identification result generates retransmission control information for processing the reception signal as the retransmission packet, and outputs the generated retransmission control information to the packet storage unit 408, the signal selection unit 409, and the HARQ processing unit 404.

First, an initial process of an iterative process for the retransmission packet will be described as a process to be performed after the retransmission packet is received as described above. The packet storage unit 408 outputs an a priori LLR $\lambda_2{}^p[b(k)]$ obtained from the initial transmission packet based on retransmission control information input from the retransmission control unit 410, which is retransmission control information for processing it as the retransmission packet here. At this time, the packet storage unit 408 outputs the stored a priori LLR after a puncturing process by a puncturing pattern of the retransmission packet. For example, the packet storage unit 408 may set the output a priori LLR as an a priori LLR stored at the time of the last iteration in the iterative process for the initial transmission packet, or may output an a priori LLR stored at the time of any number of iterations such as an a priori LLR stored upon initial iteration or the like.

As described above, the signal selection unit 409 selects either the output of the interleaving unit 407 or the output of the packet storage unit 408 based on retransmission control information from the retransmission control unit 410. Here, the signal selection unit 409 receives retransmission control information for processing it as the retransmission packet from the retransmission control unit 410, selects a stored a priori LLR $\lambda_2^p[b(k)]$ when the iterative detection and decoding unit 411 processes the output of the packet storage unit 408, that is, the initial transmission packet, since the number of iterations of the iterative process is 1, and outputs the selected a priori LLR $\lambda_2^p[b(k)]$ to the signal detection unit 401.

On the other hand, a frequency domain signal output by the FFT unit 205 is input to the signal detection unit 401 and the propagation channel estimation unit 207. The signal detection unit 401 calculates and outputs an a posteriori LLR $A_1[b(k)]$ based on the reception signal vector r(t) as the output of the FFT unit 205 and the a priori LLR $\lambda_2^p[b(k)]$ obtained from the initial transmission packet as the output of the signal selection unit 409. The subtraction unit 402 subtracts the a priori LLR $\lambda_2^p[b(k)]$ output by the packet storage unit 408 from the a posteriori LLR $A_1[b(k)]$ output by the signal detection unit 401, and outputs an external LLR $\lambda_1[b(k)]$.

The de-interleaving unit 403 performs a de-interleaving process for the external LLR $\lambda_1[b(k)]$ output by the subtraction unit 402, and outputs an a priori LLR $\lambda_1^p[b(i)]$ for the signal decoding unit 405 to the HARQ processing unit 404. In the HARQ processing unit 404, the combined packet storage unit 442 (FIG. 15) stores the a priori LLR $\lambda_1^p[b(i)]$ input from the de-interleaving unit 403. The packet combining unit 441 combines the a priori LLR stored by the combined packet storage unit 442 and the a priori LLR output by the de-interleaving unit 403 when the initial transmission packet is processed, and outputs an a priori LLR $\lambda_1^{p'}[b(i)]$ after combining.

In the signal decoding unit 405, first, the error correction decoding unit 451 (FIG. 16) calculates an a posteriori LLR $\Lambda_2[b(i)]$ by using the a priori LLR $\lambda_1^{p'}[b(i)]$ after combining. The error detection unit 452 performs error detection for an information bit of an a posteriori LLR calculated by the error correction decoding unit 451 by a hard decision or the like. If no error is detected, the iterative process is ended and decoded bits are output as a hard decision result of information bits and error detection information indicating that no error is detected to the retransmission control unit 410. If an error is detected, the iterative process is performed.

Next, an iterative process of a retransmission packet will be described. The error detection unit 452 in the signal decoding unit 405 outputs an a posteriori LLR calculated by the error correction decoding unit 451 to the subtraction unit 406. The subtraction unit 406 outputs an external LLR $\lambda_2[b(i)]$ by subtracting an a priori LLR $\lambda_1^{p'}[b(i)]$ after combining output by the HARQ processing unit 404 from an a posteriori LLR $A_2[b(i)]$ output by the signal decoding unit 405. The interleaving unit 407 performs an interleaving process for the external LLR $\lambda_2[b(i)]$ output by the subtraction unit 406, and outputs an a priori LLR $\lambda_2^p[b(k)]$ for the signal detection unit 401 to the packet storage unit 408, the signal selection unit 409, and the signal detection unit 401.

The packet storage unit 408 stores the a priori LLR $\lambda_2^p[b(k)]$. Here, since a process is performed for a retransmission packet and the number of iterations is 2 or more, the signal selection unit 409 selects an a priori LLR $\lambda_2^p[b(k)]$ output by the interleaving unit 407 and outputs the selected a priori LLR $\lambda_2^p[b(k)]$ to the signal detection unit 401. The signal detection unit 401 calculates an a posteriori LLR $\Lambda_1[b(k)]$ based on the input a priori LLR $\lambda_2^p[b(k)]$ and a frequency domain signal from the FFT unit 205. Thereafter, the above-described process of the iterative detection and decoding unit 411 is iterated until the error detection unit 452 (FIG. 16) in the signal decoding unit 405 determines to end the iterative process in the case where no error is detected, the case where the number of iterations reaches the preset maximum number of iterations, or the like.

When the packet reception device 2 which performs the iterative process using turbo equalization receives a retransmission packet in a communication system using HARQ in this embodiment, it is possible to reduce the number of retransmissions and the number of iterative processes by performing a signal detection process of an initial process for a retransmission packet by using a priori information generated from an initial transmission packet.

Maximum likelihood decoding (MLD), maximum a posteriori probability (MAP), log-MAP, Max-log-MAP, a soft output Viterbi algorithm (SOVA), and the like may be used as a signal detection method and a signal decoding method, but the present invention is not limited thereto.

Signal detection using a priori information based on an initial transmission packet in an initial process for a retransmission packet is performed in the above description, but the present invention is not limited thereto. For example, when the packet reception device 4 receives at least one retransmission packet, all retransmission packets including even the initial transmission packet may be stored, signal detection may be performed using a priori information based on a packet selected from among the packets, and signal detection may be performed using a combination of a priori information based on at least two packets.

The HARQ processing unit 404 uses coded bit LLRs obtained by an initial process for an initial transmission packet to be combined in the above description, but the present invention is not limited thereto. For example, coded bit LLRs obtained by the last iterative process may be used. Alternatively, any of coded bit LLRs obtained by the respective iterative processes may be used. For example, a coded bit LLR having the highest likelihood may be used.

The HARQ processing unit 404 uses the same coded bit LLR in all iterative processes for the initial transmission packet to be combined in the above description, but the present invention is not limited thereto. For example, the combined packet storage unit may store all coded bit LLRs obtained by the respective iterative processes for the initial transmission packet. In iterative processes when a retransmission packet is received, different coded bit LLRs may be combined for each iterative process.

The case where a packet reception device performs the iterative process has been described above, but the present invention is not limited thereto. The present invention may also be applied to a packet reception device which does not perform the iterative process. That is, the packet reception device which does not perform the iterative process may also generate a replica of a retransmission packet by using coded bit LLRs obtained by an initial transmission packet, and perform signal detection for the retransmission packet by using it as a priori information.

The case where the HARQ processing unit 404 performs a combining process in all iterative processes has been described above, but the present invention is not limited thereto. For example, at least one combining process may not be performed as in the case where the combining process is performed only in a first iterative process of the iterative processes, or the like.

A process of combining two packets when the packet reception device 4 receives an initial transmission packet and then requests the packet transmission device 1 to perform retransmission and the packet reception device 4 receives a retransmission packet has been described above, but the present invention is not limited thereto. For example, if at least two retransmission packets are received, results after demodulation processes for all received packets may be combined and results after demodulation processes for at least two packets among all the received packets may be combined.

The case where a retransmission packet is used as a reception signal for performing signal detection in the iterative process when an error is detected in the error correction decoding result of data obtained by combining a demodulation result of an initial transmission packet with a demodulation result of a retransmission packet after the retransmission packet is received has been described, but the present invention is not limited thereto. The initial transmission packet may be used as the reception signal for performing signal detection in the iterative process. At this time, the initial transmission packet may be stored by providing a reception signal storage unit before the signal detection unit 401.

The case of using a multicarrier signal as a transmission/reception signal has been described above, but a single carrier signal may be used. The case where the interleaving units 102 and 407 and the de-interleaving unit 403 are used has been described above, but these may not be used.

The use of turbo equalization which performs frequency domain signal detection in the packet reception device 4 has been described, but the configuration of the packet reception device 4 of this embodiment is also applicable to a packet reception device of turbo equalization which performs time domain signal detection.

The configuration of the packet reception device 4 of this embodiment may also be applicable to a receiver using a frequency domain SC/MMSE type of turbo equalization or a time domain SC/MMSE type of turbo equalization. It is also applicable to a packet reception device which performs stream separation upon MIMO transmission.

When the stream separation upon MIMO transmission is performed, the packet reception device has a stream separation unit which respectively separates spatially multiplexed streams.

[Third Embodiment]

In this embodiment, a method of reducing the number of retransmissions and the number of iterative processes by performing signal separation of an initial process for a retransmission packet by using a replica signal generated by an initial transmission packet when a packet reception device which performs signal separation by an iterative process receives the retransmission packet in a communication system which performs MIMO transmission using HARQ will be described.

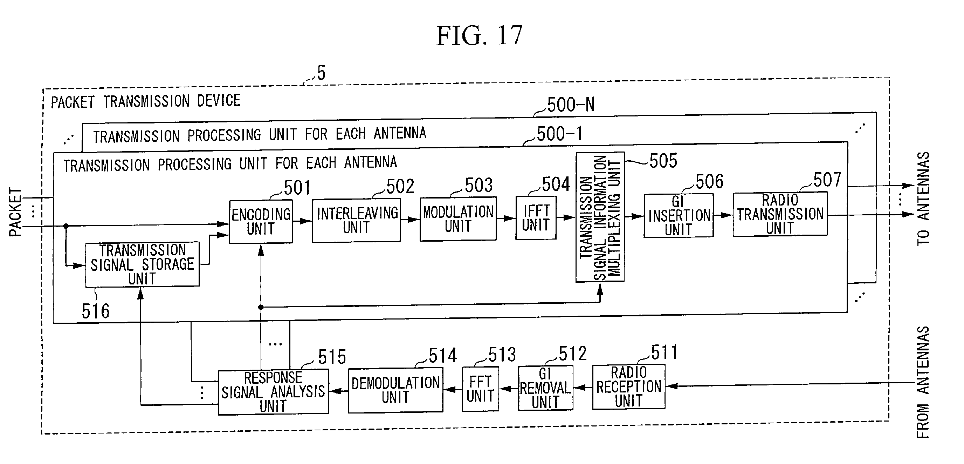

FIG. 17 is a schematic block diagram showing the configuration of a packet transmission device 5 according to this embodiment.

The packet transmission device 5 has transmission processing units for each antenna (transmission processing units for each antenna) 500-1 to 500-N, a response signal analysis unit 515, a demodulation unit 514, an FFT unit 513, a GI removal unit 512, and a radio reception unit 511. The case where the packet transmission device 5 according to this embodiment performs transmission by N transmission antennas will be described. The transmission processing units 500-1 to 500-N for each antenna respectively include an encoder 501, an interleaving unit 502, a modulation unit 503, an IFFT unit 504, a transmission signal information multiplexing unit 505, a GI insertion unit 506, a radio transmission unit (transmission unit) 507, and a transmission signal storage unit 516.

First, the packet transmission device 5 inputs information bits for each antenna (packets) to be transmitted for the packet reception device 6 to the transmission processing units 500-1 to 500-N for each antenna. Here, the case where one packet is transmitted by each transmission antennas will be described. That is, the case where N packets are transmitted by the N transmission antennas has been described, but the number of packets to be transmitted is not limited, and may be greater than or less than N. Each of the transmission processing units 500-1 to 500-N for each antenna inputs the input information bits to the encoding unit 501 and the transmission signal storage unit 516. The transmission signal storage unit 516 stores the information bits so that transmitted information bits are retransmitted when there is a retransmission request from the packet reception device 6. The encoding unit 501 performs error correction coding for the input information bits by a convolutional code, a turbo code, an LDPC code, or the like, and generates coded bits.

The interleaving unit 502 performs an interleaving process for the coded bits generated by the encoding unit 501. The modulation unit 503 maps the coded bits interleaved by the interleaving unit 502 to a modulation symbol of QPSK, 16QAM, or the like. The IFFT unit 504 performs frequency-to-time conversion for the modulation symbol by an IFFT process or the like, and generates a time domain signal.

The transmission signal information multiplexing unit 505 multiplexes a signal of transmission signal information as information regarding a transmission signal such as whether a corresponding packet is an initial transmission packet or a retransmission packet into the time domain signal output by the IFFT unit 504. It is preferable to multiplex the transmission signal information so that the receiver is able to separate the transmission signal information. For example, time division multiplexing, frequency division multiplexing, code division multiplexing, MIMO multiplexing, or the like may be used as a method of multiplexing with a time domain signal. The GI insertion unit 506 inserts a GI into a signal multiplexed by the transmission signal information multiplexing unit 505. The radio transmission unit 507 performs digital-to-analog conversion, frequency conversion, and the like for the signal into which the GI is inserted, and transmits the signal via antennas.

The radio reception unit 511 receives a signal including a response signal for each packets (each transmission antennas) among signals transmitted by the packet reception device 6 and performs frequency conversion, analog-to-digital conversion, and the like. The GI removal unit 512 removes a GI from a signal digitally converted by the radio reception unit 511. The FFT unit 513 performs an FFT process for the signal from which the GI is removed, and converts the signal into a frequency domain signal.

The demodulation unit 514 demodulates the frequency domain signal. The response signal analysis unit 515 analyzes the demodulated signal as the response signal for each packets. The packet transmission device 5 analyzes whether a response to a packet transmitted to the packet reception device 6 is a receipt notification (ACK) or a non-receipt notification (NACK). The analysis result is respectively input to the transmission signal storage unit 516, the encoding unit 501, and the transmission signal information multiplexing unit 505 in the transmission processing units 500-1 for each antenna to 500-N as a transmission source of each packet. A transmission processing unit for each antenna transmitting the packet among the transmission processing units 500-1 to 500-N for each antenna retransmits the packet for which the analysis result is the non-receipt notification (NACK).

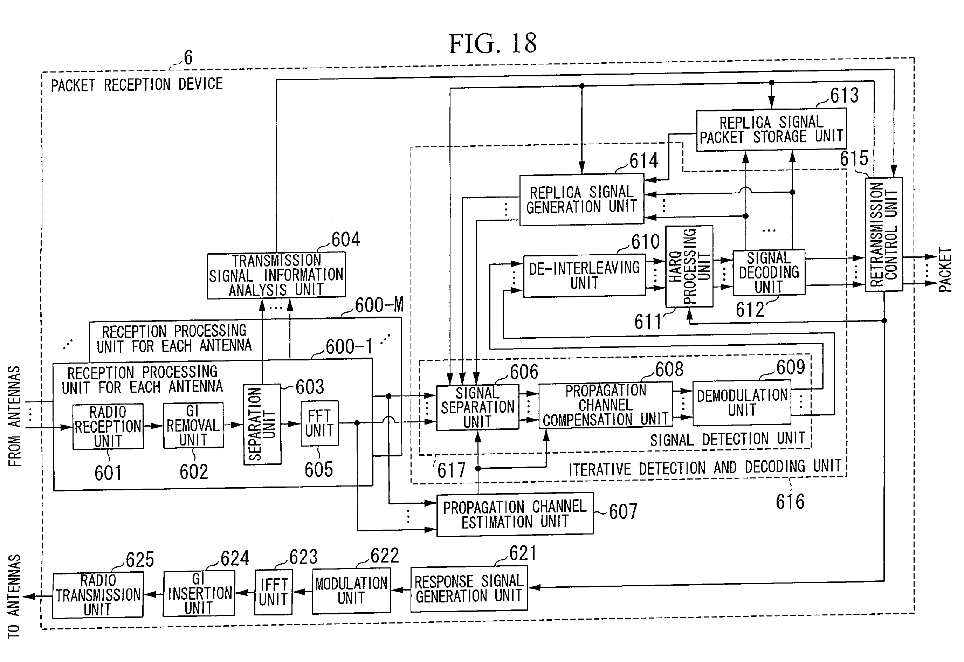

FIG. 18 is a schematic block diagram showing the configuration of the packet reception device 6 according to this embodiment.
The packet reception device 6 includes reception processing units 600-1 to 600-N for each antenna, a transmission signal information analysis unit 604, a signal separation unit (stream separation unit, interference cancellation unit, soft cancellation unit, or interference removal unit) 606, a propagation channel estimation unit 607, a propagation channel compensation unit (MMSE filter unit) 608, a demodulation unit 609, a de-interleaving unit 610, a HARQ processing unit 611, a signal decoding unit 612, a replica signal packet storage unit 613, a replica signal generation unit (soft replica generation unit) 614, a retransmission control unit 615, a response signal generation unit 621, a modulation unit 622, an IFFT unit 623, a GI insertion unit 624, and a radio transmission unit 625. Each of the reception processing units 600-1 to 600-M for each antenna includes a radio reception unit (reception unit) 601, a GI removal unit 602, a separation unit 603, and an FFT unit 605.

The signal separation unit 606, the propagation channel compensation unit 608, the demodulation unit 609, the de-interleaving unit 610, the HARQ processing unit 611, the signal decoding unit 612, and the replica signal generation unit 614 function as an iterative detection and decoding unit 616. The signal separation unit 606, the propagation channel compensation unit 608, and the demodulation unit 609 function as a signal detection unit 617. The packet reception device 6 according to this embodiment performs reception by M reception antennas.

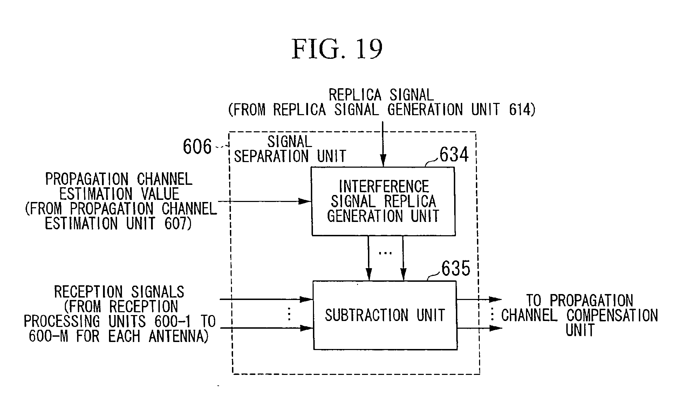

FIG. 19 is a schematic block diagram showing the configuration of the signal separation unit 606 according to this embodiment. The signal separation unit 606 has an interference replica generation unit 634 and a subtraction unit 635. According to this embodiment, the HARQ processing unit 611, the signal decoding unit 612, and the replica signal generation unit 614 are a block in which processes of the HARQ processing unit 211, the signal decoding unit 212, and the replica signal generation unit 214 of the first embodiment shown in FIG. 2 are performed for M antennas in the packet transmission device 5.

Hereinafter, first, the operation when the packet reception device 6 receives an initial transmission packet will be described. Signals respectively received by the M reception antennas are input to the respective corresponding reception processing units 600-1 to 600-M for each antenna. The radio reception unit 601 performs frequency conversion, analog-to-digital conversion, and the like for a reception signal. The GI removal unit 602 removes a GI from the signal digitally converted by the radio reception unit 601. The separation unit 603 separates the signal from which the GI is removed into transmission signal information and a signal including information bits.

The transmission signal information separated by the separation unit 603 is input to the transmission signal information analysis unit 604, and the signal including the information bits is input to the FFT unit 605. The transmission signal information analysis unit 604 analyzes whether each packet transmitted by the packet transmission device 5 is an initial transmission packet or a retransmission packet based on the transmission signal information received by each reception antennas. An analysis result is output to the retransmission control unit 615. The FFT unit 605 performs time-to-frequency conversion for the signal including the information bits by an FFT process, and outputs the converted signal to the signal separation unit 606 and the propagation channel estimation unit 607. Here, a reception signal vector R(k) for a $k^{th}$ subcarrier can be expressed by Equation (9) in an N×M MIMO system in which the number of transmission antennas and the number of reception antennas are N and M, respectively.

$$\mathbf{R}(k) = \mathbf{H}(k)\mathbf{S}(k) + \mathbf{N}(k) \qquad \cdots (9)$$

$$\mathbf{R}(k) = \begin{bmatrix} R_1(k) & \cdots & R_M(k) \end{bmatrix}^T$$

$$\mathbf{H}(k) = \begin{pmatrix} H_{11}(k) & \cdots & H_{1N}(k) \\ \vdots & \ddots & \vdots \\ H_{M1}(k) & \cdots & H_{MN}(k) \end{pmatrix}$$

$$\mathbf{S}(k) = \begin{bmatrix} S_1(k) & \cdots & S_N(k) \end{bmatrix}^T$$

$$\mathbf{N}(k) = \begin{bmatrix} N_1(k) & \cdots & N_M(k) \end{bmatrix}^T$$

Here, the reception signal vector R(k) is a vector having elements of $k^{th}$ subcarrier signals respectively output by M FFT units 605, H(k) is a matrix having elements of propagation channel characteristics of combinations among the N transmission antennas and the M reception antennas, a transmission signal vector S(k) is transmission signals of the N transmission antennas, N(k) is receiver noise components of the M reception antennas, and the superscript T is a transpose matrix.

The propagation channel estimation unit 607 estimates a propagation channel characteristic matrix H(k) shown in Equation (9) based on reception signals from the respective reception antennas, and inputs the estimated propagation channel characteristic matrix H(k) to the signal separation unit 606 and the propagation channel compensation unit 608. An estimated propagation channel estimation value for each reception antennas is output. The propagation channel estimation unit 607 stores a propagation channel estimation value for each reception packet until the packet reception device 6 accurately receives information bits transmitted by the packet transmission device 5. A propagation channel estimation value is calculated based on a frequency domain signal output by the FFT unit 605 in this embodiment, but the present invention is not limited thereto. The propagation channel estimation value may be calculated based on a time domain signal before an input to the FFT unit 605. For example, a method using a pilot signal including known information between a transmitter and a receiver, or the like may be used as a propagation channel estimation method to be performed by the propagation channel estimation unit 607, but the present invention is not limited thereto. Signals of the respective reception antennas output by the reception processing units 600-1 to 600-M for each antenna are input to the signal separation unit 606.

Hereinafter, the operations of the signal separation unit 606 and the propagation channel compensation unit 608 of an initial process for an initial transmission packet will be described. Since no replica signal is generated in the initial process for the initial transmission packet, the signal separation unit 606 directly outputs an input signal. The propagation channel compensation unit 608 extracts a transmission signal vector S(k) from the reception signal vector R(k) by multiplying a weight coefficient of a ZF criterion or an MMSE criterion. Thus, the propagation channel compensation unit 608 simultaneously performs signal separation and propagation channel compensation in the initial process. As a weight coefficient to be used in the initial process, for example, Equation (10) may be used as a weight coefficient $W_{ZF}(k)$ of the ZF criterion, and Equation (11) may be used as a weight coefficient $W_{MMSE}(k)$ of the MMSE criterion.

$$W_{ZF}(k) = H^H(k)\left(H(k)H^H(k)\right)^{-1} \quad \text{or} \quad \left(H^H(k)H(k)\right)^{-1}H^H(k) \qquad \cdots (10)$$

$$W_{MMSE}(k) = H^H(k)(H(k)H^H(k) + \sigma^2 I_M)^{-1} \quad \text{or} \quad (H^H(k)H(k) + \sigma^2 I_N)^{-1}H^{H(k)}$$

$$\cdots (11)$$

In this regard, the superscript H is the complex conjugate transpose of a matrix, the superscript -1 is an inverse matrix, $\sigma^2$ is noise power, and IN is an N×N unit matrix. Here, linear processes using the ZF criterion and the MMSE criterion have been described, but a non-linear process as in a maximum likelihood (ML) criterion may be used.

Next, the operations of the signal separation unit 606 and the propagation channel compensation unit 608 of an iterative process other than that of an initial time will be described. At the time of the iterative process, a transmission signal replica output by the replica signal generation unit 614 to be described later is input to the signal separation unit 606. The signal separation unit 606 performs signal separation by generating an interference signal except for a packet intended to be extracted based on a transmission signal replica and a propagation channel estimation value, and subtracting the generated interference signal from the reception signal.

Here, a method of extracting a packet transmitted from a representative $p^{th}$ (1≤p≤N) transmission antenna will be described since the signal separation unit 606 extracts all N packets transmitted from the N transmission antennas, but any packet is extracted in the same method. FIG. 19 is a schematic block diagram showing the configuration of the signal separation unit 606. The signal separation unit 606 includes an interference signal replica generation unit 634 and a subtraction unit 635. A transmission signal replica S'(k) input from the replica signal generation unit 614 to the interference signal replication generation unit 634 is expressed by Equation (12). The interference signal replica generation unit 634 generates an interference signal replica $R_p(k)$ excluding the packet transmitted from the $p^{th}$ transmission antenna by Equation (13).

$$S'(k) = \begin{bmatrix} S_1'(k) & \cdots & S_{p-1}'(k) & S_p'(k) & S_{p+1}'(k) & \cdots & S_N'(k) \end{bmatrix}^T \qquad \cdots (12)$$

$$R_p(k) = H(k)\, S_p'(k) \qquad \cdots (13)$$

$$S_p'(k) = \begin{bmatrix} S_1'(k) & \cdots & S_{p-1}'(k) & 0 & S_{p+1}'(k) & \cdots & S_N'(k) \end{bmatrix}^T$$

The subtraction unit 635 extracts a packet transmitted from the $p^{th}$ transmission antenna by subtracting the interference signal replica $R_p(k)$ generated by the interference replica generation unit 634 from the reception signal R(k) generated by the FFT unit 605. After signals of all first to $N^{th}$ packets are extracted (signal separation), the subtraction unit 635 outputs the extracted packet signals to the propagation channel compensation unit 608. Thereafter, all packets are processed in a packet unit. The propagation channel compensation unit 608 performs propagation channel compensation for the signal separated by the signal separation unit 606 into each packet by using a propagation channel estimation value estimated by the propagation channel estimation unit 607.

Subsequent processes of the demodulation unit 609, the de-interleaving unit 610, the HARQ processing unit 611, the signal decoding unit 612, the retransmission control unit 615, the replica signal packet storage unit 613, and the replica signal generation unit 614 are the same as those of the first embodiment. In this regard, the processes are performed for N packets in a packet unit. The response signal generation unit 621 generates a receipt notification (ACK) or a non-receipt notification (NACK) for each packet based on error detection information output by the retransmission control unit 613. Subsequent processes of the modulation unit 622, the IFFT unit 623, the GI insertion unit 624, and the radio transmission unit 625 are the same as those of the first embodiment. For example, a response signal for each packet may be transmitted using code division multiplexing by orthogonal codes, time division multiplexing, frequency division multiplexing, MIMO multiplexing, or the like, but the present invention is not limited thereto.

Next, the case where the packet reception device 6 receives a retransmission packet will be described. Hereinafter, the case where all initial transmission packets are non-receipt notifications (NACK) and all packets transmitted as the initial transmission packets are retransmitted will be described. Reception signals received by the M reception antennas are respectively input to the corresponding reception processing units 600-1 to 600-M for each antenna. The reception processing units 600-1 to 600-M for each antenna, the transmission signal information analysis unit 604, and the retransmission control unit 615 perform the same processes as those of the case where the initial transmission packet is received, except for a process in which the transmission signal information analysis unit 604 identifies retransmission packets and the retransmission control unit 615 receiving an identification result generates N pieces of retransmission control information.

Since the N pieces of retransmission control information for processing retransmission packets are received from the retransmission control unit 615, the replica signal packet storage unit 613 outputs coded bit LLRs of a stored initial transmission packet for each of N retransmission packets. The replica signal generation unit 614 generates replica signals of the retransmission packets by using coded bit LLRs of initial transmission packets input from the replica signal packet storage unit 613, and outputs the generated replica signals to the signal separation unit 606. The signal separation unit 606 performs signal separation to extract the N retransmission packets by using the reception signals output by the reception processing units 600-1 to 600-M for each antenna and the replica signals output by the replica signal generation unit 614. Thereafter, the propagation channel estimation unit 607, the propagation channel compensation unit 608, the demodulation unit 609, and the de-interleaving unit 610 perform the same processes as those for the initial transmission packets.

The HARQ processing unit 611 performs the same process as that of the first embodiment for the N retransmission packets. The coded bit LLRs of the retransmission packets and the retransmission control information output by the retransmission control unit 615 are input to the HARQ processing unit 611. Based on the retransmission control information, the combined packet storage unit in the HARQ processing unit 611 outputs coded bit LLRs obtained by an initial process for a stored initial transmission packet to the packet combining unit in the HARQ processing unit 611.

Based on the retransmission control information, the packet combining unit combines coded bit LLRs of a retransmission packet with the coded bit LLRs obtained by the initial process for the initial transmission packet stored by the combined packet storage unit, and outputs the combined coded bit LLRs to the signal decoding unit 612. In this regard, this process for all the N packets is performed for each corresponding packet. Subsequent processes of the signal decoding unit 612 and the replica signal generation unit 614 are the same as those at the time of the initial transmission packet. The above process is iterated until packets are received with no error or a determination is made to end the retransmission process.

When the packet reception device 6 which performs signal separation by an iterative process receives a retransmission packet in a communication system which performs MIMO transmission using HARQ in this embodiment, it is possible to reduce the number of retransmissions and the number of iterative processes by performing a combining process during an iterative process and utilizing the reliability of a reception signal improved by the retransmission packet.

The case where all initial transmission packets are retransmitted has been described in this embodiment, but the present invention is applicable even in the case where an initial transmission packet and a retransmission packet are mixed during MIMO transmission. For example, a number unique to each packet and the number of transmissions may be added as transmission signal information.

In this case, when a received signal is a signal into which the retransmission packet and another desired packet are multiplexed to interfere with each other and the signal detection unit 617 detects a signal of the desired packet, it is possible to use a replica signal of a retransmission packet generated by the replica signal generation unit 614 based on coded bit LLRs of an initial transmission packet related to a retransmission packet multiplexed with a desired packet among coded bit LLRs of initial transmission packets stored by the replica signal packet storage unit 613.

Thereby, the number of retransmissions for a desired packet and the number of iterative processes can be reduced since the reliability of interference cancellation for the desired packet is improved and error detection frequency in error detection for the desired packet is suppressed.

During the iterative process, a maximum LLR may be used to acquire a hard decision result or a soft decision value by the replica signal generation unit 614 for a packet for which a receipt notification (ACK) is generated among MIMO-multiplexed packets.

Coded bit LLRs obtained by the initial process are used for the initial transmission packet to be combined with a retransmission packet in the HARQ processing unit 611 in the above description, but the present invention is not limited thereto. For example, coded bit LLRs obtained by the last iterative process may be used. Alternatively, any of coded bit LLRs obtained by the respective iterative processes may be used. For example, a coded bit LLR having the highest likelihood may be used.

Coded bit LLRs obtained by an initial process are used for a retransmission packet to be combined in the HARQ processing unit 611 in the above description, but the present invention is not limited thereto. For example, coded bit LLRs obtained by performing the iterative process a preset number of iterations may be used, and any of coded bit LLRs respectively obtained by a plurality of iterative processes may be used. For example, a coded bit LLR having the highest likelihood may be used.

A process of combining two packets when the packet reception device 6 receives an initial transmission packet and then requests the packet transmission device 5 to perform retransmission and the packet reception device 6 receives a retransmission packet has been described above, but the present invention is not limited thereto. For example, if at least two retransmission packets are received, results after demodulation processes for all received packets may be combined and results after demodulation processes for at least two packets among all received packets may be combined.

The case where a reception signal of a retransmission packet is used as a reception signal for performing signal separation in the iterative process when an error is detected from an error correction decoding result of data obtained by combining the demodulation result of an initial transmission packet and the demodulation result of the retransmission packet after the retransmission packet is received has been described, but the present invention is not limited thereto. A reception signal storage unit which stores the output of the FFT unit 605 may be provided and a signal of the initial transmission packet may be separated using a reception signal of the initial transmission packet stored in the reception signal storage unit.

The case where the packet reception device 6 performs an iterative process has been described above, but the present invention is not limited thereto and is applicable even to a packet reception device which does not perform the iterative process. That is, even in the packet reception device which does not perform the iterative process, it is preferable to generate a replica of a retransmission packet by using coded bit LLRs obtained by the initial transmission packet and perform signal separation for the retransmission packet.

The case of using a multicarrier signal as a transmission/reception signal has been described above, but a single carrier signal may be used.

The case where the interleaving unit 502 and the de-interleaving unit 610 are used has been described above, but these may not be used.

The use of the packet reception device 4 which performs an iterative process using frequency domain signal separation has been described, but the configuration of the packet reception device 6 of this embodiment is also applicable to a packet reception device which performs an iterative process using time domain signal separation.

The configuration of the packet reception device 6 of this embodiment may also be applicable to a receiver using a frequency domain SC/MMSE type of turbo equalization or a time domain SC/MMSE type of turbo equalization.

[Fourth Embodiment]

In this embodiment, a method of reducing the number of retransmissions and the number of iterative processes by performing an initial decoding process in an error correction decoding process for a retransmission packet by using a priori information generated from an initial transmission packet in a packet reception device 7 which performs turbo decoding will be described.

A packet transmission device 1 according to this embodiment has the same configuration as the packet transmission device 1 shown in FIG. 1. For example, since the case where a turbo code is used as an error correction code is described, an encoding unit 101 as shown in FIG. 9 performs a coding process by the turbo code.

FIG. 9 shows the configuration of the encoding unit 101 using a turbo code as an error correction code in an error correction coding unit 122. As described in the first embodiment, information bits are input to the first encoder 124, and parity bits 1 are output. Information bits for which an internal interleaving process is performed by the internal interleaving unit 123 are input to the second encoder 125, and parity bits 2 are output. It is possible to use a recursive systematic convolutional (RSC) type of encoder in the first encoder 124 and the second encoder 125. The information bits, the parity bits 1, and the parity bits 2 are punctured by the puncturing unit 126, and coded bits are output.

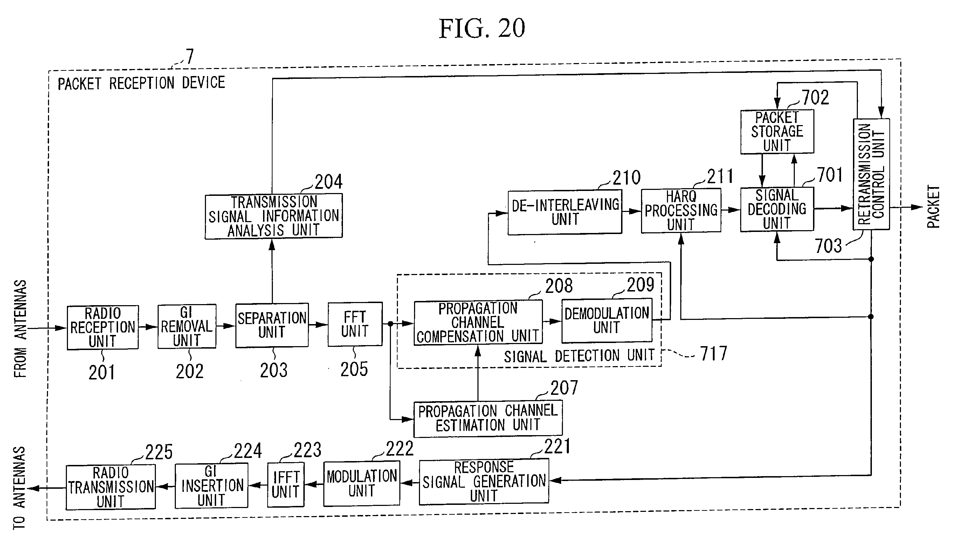

FIG. 20 is a schematic block diagram showing the configuration of the packet reception device 7 according to this embodiment.

In FIG. 20, the same reference symbols are assigned to parts 201 to 205, 207 to 211, and 221 to 225 corresponding to those of FIG. 2, and description thereof is omitted. The packet reception device 7 is different from the packet reception device 2 according to the first embodiment in that a block in which interference cancellation is performed is omitted, that is, the interference cancellation unit 206, the replica signal packet storage unit 213, and the replica signal generation unit 214 are omitted. The operation of a signal decoding unit 701 is different from that of the signal decoding unit 212, and a packet storage unit 702 is further added to the packet reception device 7. Hereinafter, the operations of the signal decoding unit 701 and the packet storage unit 702 will be mainly described as configurations different from the packet reception device 2. In this embodiment, the propagation channel compensation unit 208 and the demodulation unit 209 function as a signal detection unit 717, and the signal decoding unit 501 functions as the iterative detection and decoding unit.

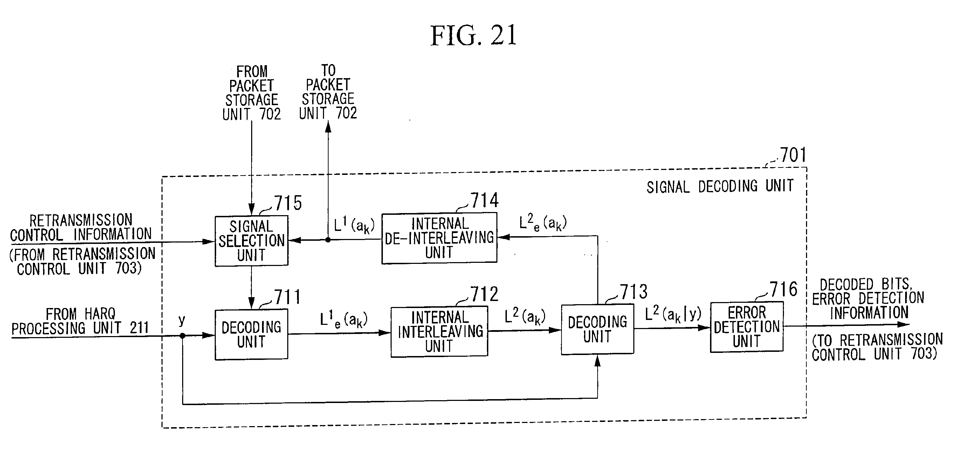

FIG. 21 is a schematic block diagram showing the configuration of the signal decoding unit 701 according to this embodiment. The signal decoding unit 701 includes a decoding unit 711, an internal interleaving unit 712, a decoding unit 713, an internal de-interleaving unit 714, a signal selection unit 715, and an error detection unit 716. The decoding unit 711 performs a decoding process corresponding to the first encoder 124 of FIG. 9. The internal interleaving unit 712 rearranges LLRs of information bits in the same way as the bit rearrangement by the internal interleaving unit 123 of FIG. 9. The decoding unit 713 performs a decoding process corresponding to the second encoder 125 of FIG. 9. The internal de-interleaving unit 714 performs a rearrangement serving as an inverse operation of the rearrangement of the internal interleaving unit 712. The signal selection unit 715 selects either the output of the internal de-interleaving unit 714 or the output of the packet storage unit 702, and outputs the selected output to the decoding unit 711.

First, the case where the packet reception device 7 receives an initial transmission packet will be described. First, an initial process for an initial transmission packet will be described. A signal y output from the HARQ processing unit 211 is input to the signal decoding unit 701. The first stage decoding unit 711 calculates an a posteriori LLR $L^1(a_k|y)$ of an information bit by using an error correction decoding method based on an information bit and a parity bit 1 included in the signal y. The decoding unit 711 outputs the result of subtracting channel information $L_c y_k^1$ and an a priori LLR $L^1(a_k)$ from the calculated a posteriori LLR $L^1(a_k|y)$. At this time, since the a posteriori LLR $L^1(a_k|y)$ can be expressed by Equation (14), the subtraction result output by the decoding unit 711 is an external LLR $L_e^1(a_k)$. At the time of the initial process for the initial transmission packet, $L^1(a_k)=0$.

$$L^1(a_k \mid y) = L^1(a_k) + L_c y_k^1 + L_e^1(a_k) \qquad \cdots (14)$$

Here, $a_k$ is a $k^{th}$ information bit, and $L^1(a_k)$ is an a priori LLR (a priori information), and is output from the signal selection unit 715. $L_c y_k^1$ is channel information, $L_c$ is a communication channel value based on an estimation result of the propagation channel estimation unit 207, and $y_k^1$ denotes a $k^{th}$ information bit of an output signal y of the HARQ processing unit 211. $L_e^1(a_k)$ is an external LLR (external information).

The internal interleaving unit 712 performs an internal interleaving process for the external LLR $L_e^1(a_k)$ input from the decoding unit 711, and outputs an a priori LLR $L^2(a_k)$ to the second stage decoding unit 713.
The a priori LLR $L^2(a_k)$ and the signal y are input to the second stage decoding unit 713. First, the second stage decoding unit 713 generates information bits after internal interleaving for information bits included in the signal y. Next, the decoding unit 713 calculates an a posteriori LLR $L^2(a_k|y)$ of an information bit by using an error correction decoding method to be described later based on an information bit after the internal interleaving and a parity bit 2 included in the signal y. The decoding unit 713 outputs the calculated a posteriori LLR $L^2(a_k|y)$ to the error detection unit 716.

The error detection unit 716 performs error detection by a hard decision for the information bit of the a posteriori LLR calculated by the decoding unit 713, or the like. If no error is detected, the iterative process is ended and decoded bits and error detection information are output to a retransmission control unit 703. If an error is detected, the iterative process is performed. Next, the iterative process for the initial transmission packet will be described. The decoding unit 713 outputs the result of subtracting channel information $L_c y_k^2$ and an a priori LLR $L^2(a_k)$ from the calculated a posteriori LLR $L^2(a_k|y)$ to the internal de-interleaving unit 714. At this time, since the a posteriori LLR $L^2(a_k|y)$ can be expressed by Equation (15), the subtraction result output by the decoding unit 713 to the internal de-interleaving unit 714 is an external LLR $L_e^2(a_k)$.

$$L^2(a_k \mid y) = L^2(a_k) + L_c y_k^2 + L_e^2(a_k) \qquad \cdots (15)$$

Here, $L^2(a_k)$ is an a priori LLR (a priori information) and is output from the internal interleaving unit 712. $L_e^2(a_k)$ is an external LLR (external information). The decoding unit 713 calculates the external LLR $L_e^2(a_k)$ by subtracting channel information and an a priori LLR from the calculated a posteriori LLR. The calculated external LLR $L_e^2(a_k)$ is output from the decoding unit.
The internal de-interleaving unit 714 performs an internal de-interleaving process for the input external LLR $L_e^2(a_k)$, and outputs an a priori LLR $L^1(a_k)$ for the first stage decoding unit 711. The a priori LLR $L^1(a_k)$ is input to the packet storage unit 702 and the signal selection unit 715.

The packet storage unit 702 stores the a priori LLR $L^1(a_k)$ output by the internal de-interleaving unit 714. The signal selection unit 715 selects the a priori LLR $L^1(a_k)$ output by the internal de-interleaving unit 714, and outputs the selected a priori LLR $L^1(a_k)$ to the first stage decoding unit 711.
The first stage decoding unit 711 calculates an a posteriori LLR $L^1(a_k|y)$ of an information bit based on an information bit and a parity bit 1 included in the signal y, and an a priori LLR $L^1(a_k)$. Thereafter, the error detection unit 716 operates until the end condition that no error is detected from the processing result of the decoding unit 713 or the number of iterations reaches the preset maximum number of iterations is satisfied or a determination is made to end the iterative process.

The case where the packet reception device 7 receives a retransmission packet will be described. If a reception signal is identified to be a retransmission packet based on transmission signal information, the retransmission control unit 703 generates retransmission control information for processing the reception signal as the retransmission packet, and outputs the generated retransmission control information to the packet storage unit 702, the signal decoding unit 701, and the HARQ processing unit 211.

First, an initial process for the retransmission packet will be described. The packet storage unit 702 outputs an a priori LLR $L^{1'}(a_k)$ of a stored initial transmission packet to the signal decoding unit 701 based on the retransmission control information. At this time, if the packet storage unit 702 also includes and stores parity bits for a priori LLRs obtained from the initial transmission packet, a puncturing process is performed by a puncturing pattern of the retransmission packet.

The a priori LLR $L^{1'}(a_k)$ of the initial transmission packet and a signal y output from the HARQ processing unit 211 are input to the signal decoding unit 701. The first stage decoding unit 711 of the signal decoding unit 701 calculates an a posteriori LLR $L^1(a_k|y)$ of an information bit by using an error correction decoding method based on an information bit and a parity bit 1 included in the signal y and the a priori LLR $L^{1'}(a_k)$ of the initial transmission packet. The decoding unit 711 subtracts channel information and an a priori LLR of the initial transmission packet from the calculated a posteriori LLR. Here, since the a posteriori LLR is expressed by Equation (16), the decoding unit 711 calculates and outputs an external LLR $L_e^1(a_k)$ by the subtraction.

$$L^1(a_k \mid y) = L^{1'}(a_k) + L_c y_k^1 + L_e^1(a_k) \qquad \cdots (16)$$

Here, $L^{1'}(a_k)$ is an a priori LLR (a priori information) of an initial transmission packet and is output from the signal selection unit 715. $L_c y_k^1$ is channel information, $L_c$ is a communication channel value, and $y_k^1$ denotes a $k^{th}$ information bit of the signal y output by the HARQ processing unit 211. $L_e^1(a_k)$ is an external LLR (external information).

The internal interleaving unit 712 performs an internal interleaving process for the input external LLR $L_e^1(a_k)$, and outputs an a priori LLR $L^2(a_k)$ to the second stage decoding unit 713. The a priori LLR $L^2(a_k)$ and the signal y are input to the second stage decoding unit 713.

First, the second stage decoding unit 713 generates information bits after internal interleaving for information bits included in the signal y. Next, the decoding unit 713 calculates an a posteriori LLR $L^2(a_k|y)$ of an information bit based on an information bit after the internal interleaving and a parity bit 2 included in the signal y. The decoding unit 713 outputs the calculated a posteriori LLR $L^2(a_k|y)$ to the error detection unit 716. The error detection unit 716 performs error detection by a hard decision for the information bit of the a posteriori LLR calculated by the decoding unit 713, or the like. If no error is detected, the iterative process is ended and decoded bits and error detection information are output to the retransmission control unit 703. If an error is detected, the iterative process is performed.

Next, the iterative process for the retransmission packet will be described. The decoding unit 713 outputs the result of subtracting channel information $L_c y_k^2$ and an a priori LLR $L^2(a_k)$ from the calculated a posteriori LLR $L^2(a_k|y)$ to the internal de-interleaving unit 714. At this time, since the a posteriori LLR $L^2(a_k|y)$ can be expressed by Equation (15), the subtraction result output by the decoding unit 713 is an external LLR $L_e^2(a_k)$.

The internal de-interleaving unit 714 performs an internal de-interleaving process for the input external LLR $L_e^2(a_k)$, and outputs an a priori LLR $L^1(a_k)$ for the first stage decoding unit 711. The a priori LLR $L^1(a_k)$ is input to the packet storage unit 702 and the signal selection unit 715.
The packet storage unit 702 stores the a priori LLR $L^1(a_k)$ output by the internal de-interleaving unit 714.

The signal selection unit 715 selects the a priori LLR $L^1(a_k)$ output by the internal de-interleaving unit 714, and outputs the selected a priori LLR $L^1(a_k)$ to the first stage decoding unit 711.
The first stage decoding unit 711 calculates an a posteriori LLR $L^1(a_k|y)$ of an information bit based on an information bit and a parity bit 1 included in the signal y and the a priori LLR $L^1(a_k)$.
Thereafter, the same process as the iterative process for the initial transmission packet is performed until the error detection unit 716 determines to end the iterative process.

It is possible to reduce the number of retransmissions and the number of iterative processes by performing an initial decoding process in an error correction decoding process for a retransmission packet by using a priori information generated from an initial transmission packet in the packet reception device 7 which performs turbo decoding by using this embodiment.

MLD, MAP, log-MAP, Max-log-MAP, a SOVA, and the like may be used as an error correction decoding method in the decoding units 711 and 713, but the present invention is not limited thereto.

Error correction decoding using a priori information of an initial transmission packet in an initial process for a retransmission packet is performed in the above description, but the present invention is not limited thereto. For example, when the packet reception device 7 receives at least one retransmission packet, a priori information of all reception packets including even the initial transmission packet may be stored, error correction decoding may be performed using a priori information based on a packet selected from the reception packets, and error correction decoding may be performed using a combination of a priori information of at least two packets of the reception packets.

The case where a turbo code is used as an error correction code has been described above, but the present invention is not limited thereto. An error correction code for performing a decoding process by an iterative process using a priori information or the like is preferable. For example, the error correction code may be used when a sum-product decoding process is performed using an LDPC code.

The configuration of a receiver according to this embodiment is also applicable to those of the receivers of the first to third embodiments.

[Fifth Embodiment]

In this embodiment, a method of reducing the number of retransmissions and the number of iterative processes by performing interference cancellation of an initial process for a retransmission packet by using a replica signal generated from an initial transmission packet in a receiver receiving a packet of only information bits upon initial transmission and a packet including at least one parity bit upon retransmission will be described.

A packet transmission device 1 according to this embodiment is the packet transmission device 1 shown in FIG. 1. In this regard, an encoding unit 101 encodes an initial transmission packet excluding a parity bit by an error correction code, and encodes a retransmission packet including at least some parity bits by an error correction code. The difference between this embodiment and the first embodiment is that the configuration of a replica signal generation unit 801 in a packet reception device 8 in this embodiment is different from that of the packet reception device 2 in the first embodiment.

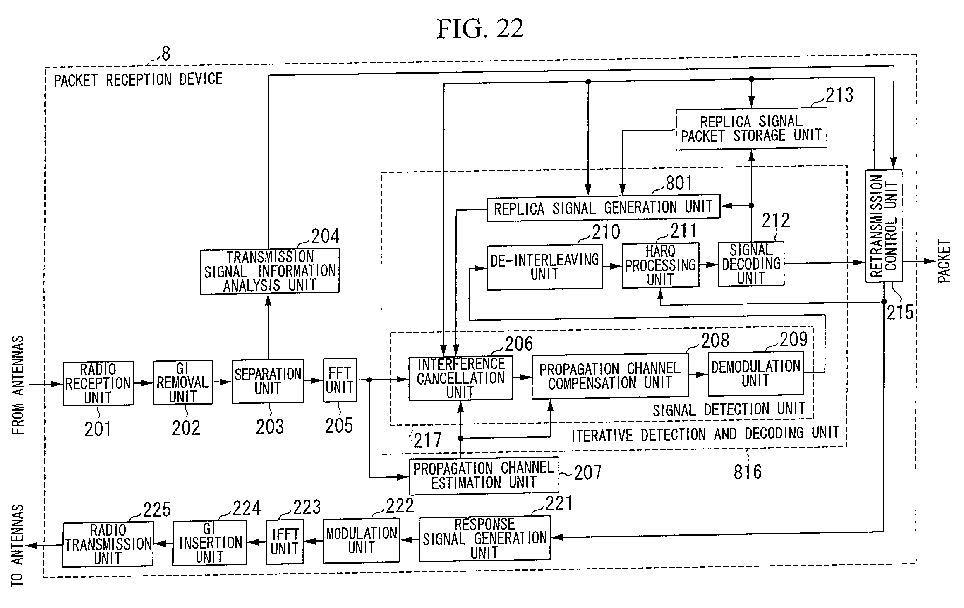

FIG. 22 is a schematic block diagram showing the configuration of the packet reception device 8 according to this embodiment. In FIG. 22, the same reference symbols are assigned to parts 201 to 213, 215, and 221 to 225 corresponding to those of FIG. 2, and description thereof is omitted. In this embodiment, an interference cancellation unit 206, a propagation channel compensation unit 208, a demodulation unit 209, a de-interleaving unit 210, a HARQ processing unit 211, a signal decoding unit 212, and the replica signal generation unit 801 function as an iterative detection and decoding unit 816. In this embodiment, since the initial transmission packet is only information bits, the signal decoding unit 212 may be configured to perform only error detection by the error detection unit 252 without performing an error correction decoding process by the error decoding unit 251 (FIG. 5) for the initial transmission packet.

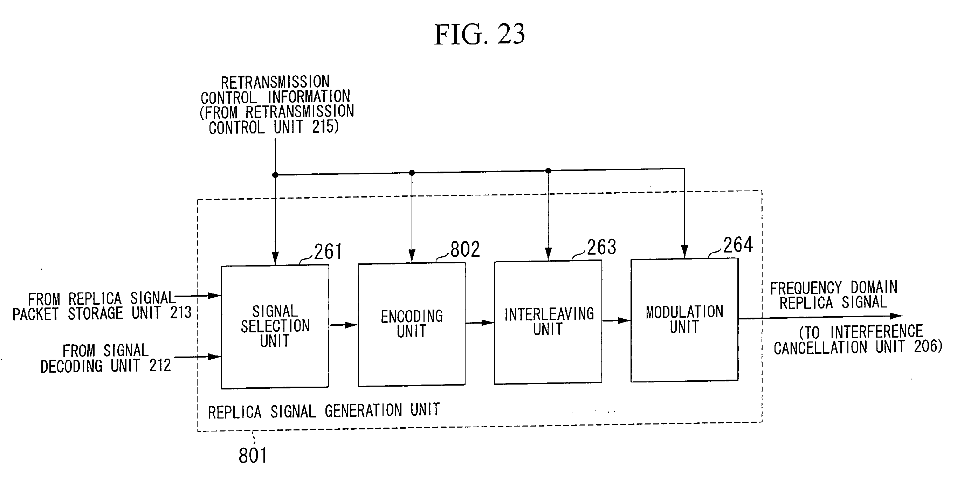

FIG. 23 is a schematic block diagram showing the configuration of the replica signal generation unit 801 according to this embodiment. The replica signal generation unit 801 has a signal selection unit 261, an encoding unit 802, an interleaving unit 263, and a modulation unit 264. In FIG. 23, the same reference symbols are assigned to parts 261, 263, and 264 corresponding to those of FIG. 6, and description thereof is omitted. When the packet reception device 8 receives an initial transmission packet including only information bits, the same processes as an initial process and an iterative process for the initial transmission packet described in the first embodiment are performed. However, since the initial transmission packet does not include a parity bit by an error correction code in this embodiment, the encoding unit 802 in the replica signal generation unit 801 directly outputs coded bit LLRs of the initial transmission packet input from the signal selection unit 261.

The case where the packet reception device 8 receives a retransmission packet will be described. As described above, the retransmission packet includes at least some parity bits by an error correction code. If the transmission signal information analysis unit 204 identifies that a reception signal is a retransmission packet based on transmission signal information received along with the retransmission packet, the retransmission control unit 215 generates retransmission control information for processing the reception signal as the retransmission packet, and outputs the generated retransmission control information to the replica signal packet storage unit 213, the replica signal generation unit 801, and the HARQ processing unit 211.

The replica signal packet storage unit 213 outputs coded bit LLRs of a stored initial transmission packet to the replica signal generation unit 801 based on the input retransmission control information. In the replica signal generation unit 801, the signal selection unit 261 selects the coded bit LLRs of the initial transmission packet output by the replica signal packet storage unit 213 from outputs of the signal decoding unit 212 and the replica signal packet storage unit 213 based on the input retransmission control information.

The encoding unit 802 performs a coding process based on the coded bit LLRs of the initial transmission packet, and generates a replica of the retransmission packet. Here, a hard decision for coded bit LLRs may be made to perform a coding process as a coding method by the encoding unit 802, and a trellis structure may be formed to generate parity bits of soft information based on soft information of coded bit LLRs, but the present invention is not limited thereto.

The interleaving unit 263 performs an interleaving process for the replica of the retransmission packet generated by the encoding unit 802. The modulation unit 264 performs a process of mapping the interleaved replica to a modulation symbol, and outputs the modulation symbol.

The iterative process for the retransmission packet is performed in the same way as the iterative process for the retransmission packet described in the first embodiment. In this regard, the encoding unit 802 in the replica signal generation unit 801 performs the same process as the above-described initial process.

It is possible to reduce the number of retransmissions and the number of iterative processes by performing interference cancellation of an initial process for a retransmission packet by using a replica signal generated from an initial transmission packet in the packet reception device 8 receiving a packet of only information bits upon initial transmission and a packet including at least one parity bit upon retransmission in this embodiment.

The replica signal generation unit 801 of this embodiment is also applicable to the packet reception devices 2 and 6 of the first and third embodiments.

A computer-readable recording medium may record a program for implementing functions of the GI removal unit 202, the separation unit 203, the transmission signal information analysis unit 204, the FFT unit 205, the propagation channel estimation unit 207, the iterative detection and decoding unit 216, the retransmission control unit 215, the response signal generation unit 221, the modulation unit 222, the IFFT unit 223, and the GI insertion unit 224 of FIG. 2; the GI removal unit 202, the separation unit 203, the transmission signal information analysis unit 204, the FFT unit 205, the propagation channel estimation unit 207, the iterative detection and decoding unit 411, the retransmission control unit 410, the response signal generation unit 221, the modulation unit 222, the IFFT unit 223, and the GI insertion unit 224 of FIG. 14; the GI removal unit 602, the separation unit 603, the transmission signal information analysis unit 604, the FFT unit 605, the propagation channel estimation unit 607, the iterative detection and decoding unit 616, the retransmission control unit 615, the response signal generation unit 621, the modulation unit 622, the IFFT unit 623, and the GI insertion unit 624 of FIG. 18; the GI removal unit 202, the separation unit 203, the transmission signal information analysis unit 204, the FFT unit 205, the propagation channel estimation unit 207, the propagation channel compensation unit 208, the demodulation unit 209, the de-interleaving unit 210, the HARQ processing unit 211, the signal decoding unit 701, the retransmission control unit 703, the response signal generation unit 221, the modulation unit 222, the IFFT unit 223, and the GI insertion unit 224 of FIG. 20; and the GI removal unit 202, the separation unit 203, the transmission signal information analysis unit 204, the FFT unit 205, the propagation channel estimation unit 207, the propagation channel compensation unit 208, the demodulation unit 209, the de-interleaving unit 210, the HARQ processing unit 211, the signal decoding unit 701, the retransmission control unit 703, the response signal generation unit 221, the modulation unit 222, the IFFT unit 223, and the GI insertion unit 224 of FIG. 22. A computer system may read and execute the program recorded on the recording medium to perform the process of each part. Here, the "computer system" includes an OS and hardware such as peripheral devices.

The "computer-readable recording medium" is a portable medium such as a flexible disc, magneto-optical disc, ROM and CD-ROM, and a storage device, such as a hard disk, built in the computer system. Furthermore, the "computer-readable recording medium" may also include a medium that dynamically holds a program for a short period of time, such as a communication line when a program is transmitted via a network such as the Internet or a communication network such as a telephone network, and a medium that holds a program for a fixed period of time, such as a volatile memory in a computer system serving as a server or client in the above situation. The program may be one for implementing part of the above functions, or the above functions may be implemented in combination with a program already recorded on the computer system.

The embodiments of the present invention have been described in detail with reference to the drawings. However, specific configurations are not limited to the embodiments and may include any design in the scope without departing from the subject matter of the present invention.

Industrial Applicability

The present invention is suitable for use in a mobile communication system, but is not limited thereto.

Reference Symbols

1, 5: Packet transmission device
2, 4, 6, 7, 8: Packet reception device
101, 501: Encoding unit
102, 502: Interleaving unit
103, 503: Modulation unit
104, 504: IFFT unit
105, 505: Transmission signal information multiplexing unit

106, 506: GI insertion unit
107, 507: Radio transmission unit
111, 511: Radio reception unit
112, 512: GI removal unit
113, 513: FFT unit
114, 514: Demodulation unit
115, 515: Response signal analysis unit
116, 516: Transmission signal storage unit
121: Error detection coding unit
122: Error correction coding unit
123: Internal interleaving unit
124: First encoder
125: Second encoder
126: Puncturing unit
201, 601: Radio reception unit
202, 602: GI removal unit
203, 603: Separation unit
204, 604: Transmission signal information analysis unit
205, 605: FFT unit
206: Interference cancellation unit
207, 607: Propagation channel estimation unit
208, 608: Propagation channel compensation unit
209, 609: Demodulation unit
210, 610: De-interleaving unit
211, 611: HARQ processing unit
212, 612: Signal decoding unit
213, 613: Replica signal packet storage unit
214, 614, 801: Replica signal generation unit
215, 615: Retransmission control unit
216, 616, 816: Iterative detection and decoding unit
217, 617: Signal detection unit
221, 621: Response signal generation unit
222, 622: Modulation unit
223, 623: IFFT unit
224, 624: GI insertion unit
225, 625: Radio transmission unit
231: Interference signal replica generation unit
232: Subtraction unit
241: Packet combining unit
242: Combined packet storage unit
251: Error correction decoding unit
252: Error detection unit
253: De-puncturing unit
254: Error correction decoding processing unit
261: Signal selection unit
262: Puncturing unit
263: Interleaving unit
264: Modulation unit
401: Signal detection unit
402, 406: Subtraction unit
403: De-interleaving unit
404: HARQ processing unit
405: Signal decoding unit
407: Interleaving unit
408: Packet storage unit
409: Signal selection unit
410: Retransmission control unit
411: Iterative detection and decoding unit

441: Packet combining unit
442: Combined packet storage unit
451: Error correction decoding unit
452: Error detection unit
500-1 to 500-N: Transmission processing unit for each antenna
600-1 to 600-M: processing unit for each antenna
606: Signal separation unit
634: Interference signal replica generation unit
635: Subtraction unit
701: Signal decoding unit
702: Packet storage unit
703: Retransmission control unit
711: Decoding unit
712: Internal interleaving unit
713: Decoding unit
714: Internal de-interleaving unit
715: Signal selection unit
716: Error detection unit
802: Encoding unit

**Claims**

1. A communication device in a communication system which performs hybrid automatic repeat request for requesting a retransmission signal when an error is detected from an initial transmission signal detected from a reception signal, the communication device comprising:

   a storage unit which stores information indicated by the detected initial transmission signal;
   a reception unit which receives a signal including a desired signal;
   an a priori information generation unit which generates a priori information for detecting the desired signal from the signal received by the reception unit based on the information stored by the storage unit when a retransmission signal related to the initial transmission signal of the information stored by the storage unit interferes with the desired signal; and
   a signal detection unit which detects the desired signal from the signal received by the reception unit using the a priori information.

2. The communication device according to claim 1, wherein the retransmission signal is a signal capable of being generated by processing the information indicated by the initial transmission signal using a preset method, and the a priori information generation unit generates the a priori information based on a signal generated by processing the information stored by the storage unit in the method.

3. The communication device according to claim 2, wherein the information indicated by the initial transmission signal is a bit stream including at least a part of a bit stream obtained by error correction coding an information bit stream transmitted by the initial transmission signal, the information bit stream being capable of being generated by error correction decoding the bit stream, and
   wherein in the preset method, the information bit stream obtained from a bit stream that is the information indicated by the initial transmission signal is error correction coded, at least some bits are extracted from preset positions, and a signal for transmitting the extracted bits is generated.

4. The communication device according to claim 1, wherein the desired signal is a retransmission signal related to the initial transmission signal of the information stored by the storage unit,
   the a priori information generation unit generates a transmission signal replica of the retransmission signal as the a priori information, and
   the signal detection unit generates an interference signal replica of inter-symbol interference to the retransmission signal from the transmission signal replica and removes the interference signal replica from the signal received by the reception unit to detect the retransmission signal.

5. The communication device according to claim 1, wherein the desired signal is a retransmission signal related to the initial transmission signal of the information stored by the storage unit,

the a priori information generation unit generates information indicating a likelihood of each bit constituting the retransmission signal as the a priori information, and

the signal detection unit equalizes the signal received by the reception unit using the information indicating the likelihood of each bit constituting the retransmission signal generated by the a priori information generation unit and detects the desired signal.

6. The communication device according to claim 1, wherein the desired signal is a signal multiplexed with a retransmission signal related to the initial transmission signal of the information stored by the storage unit,

the a priori information generation unit generates a transmission signal replica of the retransmission signal as the a priori information, and

the signal detection unit generates an interference signal replica to the retransmission signal from the transmission signal replica, and removes the interference signal replica from the signal received by the reception unit to detect the retransmission signal.

7. The communication device according to claim 6, wherein the multiplexing is spatial multiplexing by which the desired signal and the retransmission signal are transmitted from different antennas and multiplexed, code division multiplexing by which the desired signal and the retransmission signal are spread by different spreading codes and multiplexed, or frequency division multiplexing by which the desired signal and the retransmission signal are assigned to different frequencies and multiplexed, and

the interference signal replica is an interference signal replica related to interference between the multiplexed signals.

8. The communication device according to claim 1, wherein the signal detection unit performs an iterative process and detects the desired signal.

9. The communication device according to claim 8, wherein the signal detection unit uses the a priori information only in an initial process in the iterative process.

10. A communication device in a communication system which performs hybrid automatic repeat request for requesting a retransmission signal when an error is detected from an initial transmission signal detected from a received signal, the communication device comprising:

a storage unit which stores information indicated by a detected initial transmission signal;
a reception unit which receives a signal including a retransmission signal related to the initial transmission signal of the information stored by the storage unit;
an a priori information generation unit which generates information indicating a likelihood of each bit constituting the retransmission signal as a priori information for performing a decoding process for the retransmission signal based on the information stored by the storage unit;
a signal detection unit which detects the retransmission signal from the signal received by the reception unit; and
a signal decoding unit which performs an error correction decoding process for the retransmission signal detected by the signal detection unit using the a priori information generated by the a priori information generation unit, and detects bits constituting the retransmission signal.

11. A communication system comprising a first communication device and a second communication device that communicates with the first communication device, the second communication device performing hybrid automatic repeat request for requesting the first communication device to transmit a retransmission signal when the second communication device detects an error from an initial transmission signal,

wherein the second communication device comprises:

a storage unit which stores information indicated by a detected initial transmission signal;
a reception unit which receives a signal including a desired signal;
an a priori information generation unit which generates a priori information for detecting the desired signal from the signal received by the reception unit based on the information stored by the storage unit when a retransmission signal related to the initial transmission signal of information stored by the storage unit interferes with the desired signal; and
a signal detection unit which detects the desired signal from the signal received by the reception unit using the a priori information.

**12.** A reception method in a communication system comprising a first communication device and a second communication device that communicates with the first communication device, the second communication device performing hybrid automatic repeat request for requesting the first communication device to transmit a retransmission signal when the second communication device detects an error from an initial transmission signal, the reception method comprising:

receiving, by the second communication device, a signal including a desired signal;
generating, by the second communication device, a priori information for detecting the desired signal from the signal received in the reception based on information indicated by an initial transmission signal of a retransmission signal stored by a storage unit when the retransmission signal interferes with the desired signal; and
detecting, by the second communication device, the desired signal from the signal received in the reception using the a priori information.

**13.** A program for causing a computer of a communication device in a communication system which performs hybrid automatic repeat request for requesting a retransmission signal when an error is detected from an initial transmission signal detected from a reception signal, to function as:

an a priori information generation unit which generates, when the retransmission signal interferes with a desired signal, a priori information for detecting the desired signal from a received signal based on information indicated by an initial transmission signal of the retransmission signal stored by a storage unit; and
a signal detection unit which detects the desired signal from the received signal using the a priori information.

## FIG. 1

PACKET TRANSMISSION DEVICE — 1

PACKET → [101 ENCODING UNIT] → [102 INTERLEAVING UNIT] → [103 MODULATION UNIT] → [104 IFFT UNIT] → [105 TRANSMISSION SIGNAL INFORMATION MULTIPLEXING UNIT] → [106 GI INSERTION UNIT] → [107 RADIO TRANSMISSION UNIT] → TO ANTENNAS

[116 TRANSMISSION SIGNAL STORAGE UNIT]

[115 RESPONSE SIGNAL ANALYSIS UNIT] ← [114 DEMODULATION UNIT] ← [113 FFT UNIT] ← [112 GI REMOVAL UNIT] ← [111 RADIO RECEPTION UNIT] ← FROM ANTENNAS

# FIG. 2

## FIG. 3

(FROM REPLICA SIGNAL GENERATION UNIT 214)
REPLICA SIGNAL

206 ~ INTERFERENCE CANCELLATION UNIT

PROPAGATION CHANNEL
ESTIMATION VALUE
(FROM PROPAGATION CHANNEL
ESTIMATION UNIT 207)

231

INTERFERENCE
SIGNAL REPLICA
GENERATION UNIT

232

RECEPTION SIGNAL
(FROM FFT UNIT 205)

SUBTRACTION UNIT

TO PROPAGATION CHANNEL
COMPENSATION UNIT 208

RETRANSMISSION
CONTROL INFORMATION
(FROM RETRANSMISSION
CONTROL UNIT 213)

## FIG. 4

RETRANSMISSION CONTROL INFORMATION
(FROM RETRANSMISSION CONTROL UNIT 215)

242

COMBINED PACKET
STORAGE UNIT

241

FROM DE-INTERLEAVING
UNIT 210

PACKET
COMBINING UNIT

TO SIGNAL
DECODING UNIT 212

HARQ PROCESSING UNIT ~ 211

# FIG. 5

CODED BIT LLRS
(TO REPLICA SIGNAL PACKET STORAGE UNIT 213
/REPLICA SIGNAL GENERATION UNIT 214)

212

SIGNAL DECODING UNIT

251

FROM PACKET → ERROR CORRECTION DECODING UNIT
COMBINING UNIT 241

CODED BIT LLRS →

252

ERROR DETECTION UNIT

DECODED BITS, ERROR DETECTION INFORMATION

(TO RETRANSMISSION CONTROL UNIT 215)

# FIG. 6

RETRANSMISSION CONTROL INFORMATION
(FROM RETRANSMISSION CONTROL UNIT 215)

FROM REPLICA SIGNAL
PACKET STORAGE UNIT 213

FROM SIGNAL
DECODING UNIT 212

261 SIGNAL SELECTION UNIT

262 PUNCTURING UNIT

263 INTERLEAVING UNIT

264 MODULATION UNIT

FREQUENCY DOMAIN REPLICA SIGNAL

(TO INTERFERENCE CANCELLATION UNIT 206)

REPLICA SIGNAL GENERATION UNIT

214

EP 2 271 012 A1

## FIG. 7

START

S101
RECEIVE INITIAL
TRANSMISSION PACKET

S116
RECEIVE
RETRANSMISSION PACKET

S117
GENERATE RETRANSMISSION
CONTROL INFORMATION

S118
GENERATE REPLICA SIGNAL
OF RETRANSMISSION
PACKET

S119
PERFORM INTERFERENCE
CANCELLATION FOR
RETRANSMISSION PACKET

S103
DETECT SIGNAL

S104
INITIAL PROCESS? — NO

YES — S105
STORE COMBINED PACKET

S114
CANCEL INTERFERENCE

S113
GENERATE
REPLICA SIGNAL

S106
INITIAL TRANSMISSION PACKET? — YES

NO — S107
COMBINE PACKETS

S108
DECODE SIGNAL

S109
IS ERROR DETECTED? — YES

NO

S111
STORE REPLICA
SIGNAL PACKET

S112
ITERATIVE PROCESS? — YES

NO — S115
TRANSMIT NACK

S110
TRANSMIT ACK

END

# FIG. 8

PACKET TRANSMISSION
DEVICE 1

PACKET TRANSMISSION
DEVICE 2

INITIAL TRANSMISSION PACKET
TRANSMISSION

m1

INITIAL PACKET
RECEPTION

ITERATIVE
DEMODULATION PROCESS

ERROR DETECTION
→ERROR OCCURRENCE

m2

NACK TRANSMISSION

NACK RECEPTION

RETRANSMISSION
PACKET TRANSMISSION

m3

RETRANSMISSION PACKET
RECEPTION

INTERFERENCE CANCELLATION
ONLY IN INITIAL PROCESS
USING REPLICA SIGNAL OF
RETRANSMISSION PACKET
GENERATED BY INITIAL
TRANSMISSION PACKET

ITERATIVE
DEMODULATION PROCESS

DEMODULATION PROCESS
→NORMAL RECEPTION

m4

ACK TRANSMISSION

ACK RECEPTION

# FIG. 9

# FIG. 10

| CODING RATE:1/3 | CODING RATE:1/2 | CODING RATE:3/4 |
|---|---|---|
| $\begin{pmatrix} x \\ y \\ z \end{pmatrix} = \begin{pmatrix} 1 \\ 1 \\ 1 \end{pmatrix}$ | $\begin{pmatrix} x \\ y \\ z \end{pmatrix} = \begin{pmatrix} 1 & 1 \\ 1 & 0 \\ 0 & 1 \end{pmatrix}$ | $\begin{pmatrix} x \\ y \\ z \end{pmatrix} = \begin{pmatrix} 1 & 1 & 1 & 1 & 1 & 1 \\ 1 & 0 & 0 & 0 & 0 & 0 \\ 0 & 0 & 0 & 1 & 0 & 0 \end{pmatrix}$ |

# FIG. 11

HARQ PROCESSING UNIT 211

INPUT SIGNAL

| A | B | C | D | E | G | J | L |
|---|---|---|---|---|---|---|---|

ERROR CORRECTION DECODING UNIT 251

DE-PUNCTURING UNIT 253

| A | B | C | D | E | 0 | G | 0 | 0 | J | 0 | L |
|---|---|---|---|---|---|---|---|---|---|---|---|

ERROR CORRECTION DECODING PROCESSING UNIT 254

OUTPUT SIGNAL

| a' | b' | c' | d' | e' | f' | g' | h' | i' | j' | k' | l' |
|----|----|----|----|----|----|----|----|----|----|----|----|

ERROR DETECTION UNIT 252

# FIG. 12

| | CODING RATE:1/2 |
|---|---|
| INITIAL TRANSMISSION PACKET | $\begin{pmatrix} x \\ y \\ z \end{pmatrix} = \begin{pmatrix} 1 & 1 \\ 1 & 0 \\ 0 & 1 \end{pmatrix}$ |
| RETRANSMISSION PACKET | $\begin{pmatrix} x \\ y \\ z \end{pmatrix} = \begin{pmatrix} 1 & 1 \\ 0 & 1 \\ 1 & 0 \end{pmatrix}$ |

# FIG. 13

| CODED BIT LLRS OF INITIAL TRANSMISSION PACKET | A1, B1, C1, D1, E1, 0, G1, 0, 0, J1, 0, L1 |
|---|---|
| CODED BIT LLRS OF RETRANSMISSION PACKET | A2, B2, C2, D2, 0, F2, 0, H2, I2, 0, K2, 0 |
| CODED BIT LLRS AFTER COMBINING | A1+A2, B1+B2, C1+C2, D1+D2, E1, F2, G1, H2, I2, J1, K2, L1 |

FIG. 14

EP 2 271 012 A1

# FIG. 15

RETRANSMISSION CONTROL INFORMATION
(FROM RETRANSMISSION CONTROL UNIT 410)

442

COMBINED PACKET
STORAGE UNIT

441

PACKET
COMBINING UNIT

FROM DE-INTERLEAVING
UNIT 403

TO SIGNAL
DECODING UNIT 405

HARQ PROCESSING UNIT 404

# FIG. 16

CODED BIT LLRS
(TO SUBTRACTION UNIT 406)

405

SIGNAL DECODING UNIT

451

ERROR
CORRECTION
DECODING
UNIT

CODED BIT LLRS

452

ERROR
DETECTION
UNIT

FROM PACKET
COMBINING UNIT 441

DECODED BITS,
ERROR DETECTION
INFORMATION

(TO RETRANSMISSION
CONTROL UNIT 410)

## FIG. 17

FIG. 18

EP 2 271 012 A1

# FIG. 19

REPLICA SIGNAL
(FROM REPLICA SIGNAL GENERATION UNIT 614)

606 ⟋ SIGNAL
SEPARATION UNIT

PROPAGATION CHANNEL
ESTIMATION VALUE
(FROM PROPAGATION CHANNEL
ESTIMATION UNIT 607)

⟋634
INTERFERENCE
SIGNAL REPLICA
GENERATION UNIT

...

RECEPTION SIGNALS
(FROM RECEPTION
PROCESSING UNITS 600-1 TO
600-M FOR EACH ANTENNA)

⟋635
SUBTRACTION UNIT

TO PROPAGATION
CHANNEL COMPENSATION
UNIT

FIG. 20

EP 2 271 012 A1

# FIG. 21

EP 2 271 012 A1

FROM
PACKET
STORAGE
UNIT 702

TO
PACKET
STORAGE
UNIT 702

701

SIGNAL DECODING UNIT

RETRANSMISSION
CONTROL INFORMATION

(FROM RETRANSMISSION
CONTROL UNIT 703)

715

SIGNAL
SELECTION
UNIT

$L^1(a_k)$

714

INTERNAL
DE-INTERLEAVING
UNIT

$L^2_e(a_k)$

FROM HARQ
PROCESSING UNIT 211

y

711

DECODING
UNIT

$L^1_e(a_k)$

712

INTERNAL
INTERLEAVING
UNIT

$L^2(a_k)$

713

DECODING
UNIT

$L^2(a_k|y)$

716

ERROR
DETECTION
UNIT

DECODED BITS,
ERROR DETECTION
INFORMATION

(TO RETRANSMISSION
CONTROL UNIT 703)

# FIG. 22

PACKET RECEPTION DEVICE 8

- RADIO RECEPTION UNIT 201
- GI REMOVAL UNIT 202
- SEPARATION UNIT 203
- FFT UNIT 205
- TRANSMISSION SIGNAL INFORMATION ANALYSIS UNIT 204
- REPLICA SIGNAL GENERATION UNIT 801
- REPLICA SIGNAL PACKET STORAGE UNIT 213
- DE-INTERLEAVING UNIT 210
- HARQ PROCESSING UNIT 211
- SIGNAL DECODING UNIT 212
- RETRANSMISSION CONTROL UNIT 215
- INTERFERENCE CANCELLATION UNIT 206
- PROPAGATION CHANNEL COMPENSATION UNIT 208
- DEMODULATION UNIT 209
- SIGNAL DETECTION UNIT
- ITERATIVE DETECTION AND DECODING UNIT 816
- PROPAGATION CHANNEL ESTIMATION UNIT 207
- 217
- RESPONSE SIGNAL GENERATION UNIT 221
- MODULATION UNIT 222
- IFFT UNIT 223
- GI INSERTION UNIT 224
- RADIO TRANSMISSION UNIT 225

FROM ANTENNAS

TO ANTENNAS

PACKET

EP 2 271 012 A1

FIG. 23

RETRANSMISSION
CONTROL INFORMATION
(FROM RETRANSMISSION
CONTROL UNIT 215)

261  802  263  264

FROM REPLICA SIGNAL
PACKET STORAGE UNIT 213

FROM SIGNAL
DECODING UNIT 212

SIGNAL
SELECTION
UNIT

ENCODING
UNIT

INTERLEAVING
UNIT

MODULATION
UNIT

FREQUENCY DOMAIN
REPLICA SIGNAL

(TO INTERFERENCE
CANCELLATION UNIT 206)

REPLICA SIGNAL GENERATION UNIT

801

## INTERNATIONAL SEARCH REPORT

| | International application No. |
|---|---|
| | PCT/JP2009/057852 |

A. CLASSIFICATION OF SUBJECT MATTER
*H04J11/00(2006.01)i, H04B1/10(2006.01)i, H04J99/00(2009.01)i, H04L1/18
(2006.01)i, H04W28/04(2009.01)i*

According to International Patent Classification (IPC) or to both national classification and IPC

B. FIELDS SEARCHED

Minimum documentation searched (classification system followed by classification symbols)
H04J11/00, H04B1/10, H04J99/00, H04L1/18, H04W28/04

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2008-22465 A (Samsung Electronics Co., Ltd.),<br>31 January, 2008 (31.01.08),<br>Par. Nos. [0039] to [0073]; Figs. 4 to 6<br>& KR 10-2008-0007066 A | 1-9,11-13<br>10 |
| X<br>A | JP 2006-60304 A (Hitachi Kokusai Electric Inc.),<br>02 March, 2006 (02.03.06),<br>Par. Nos. [0009] to [0010]; Fig. 1<br>(Family: none) | 10<br>1-9,11-13 |

| ☒ Further documents are listed in the continuation of Box C. | ☐ See patent family annex. |
|---|---|

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
|---|---|

| Date of the actual completion of the international search<br>30 April, 2009 (30.04.09) | Date of mailing of the international search report<br>19 May, 2009 (19.05.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2009/057852 |

C (Continuation).   DOCUMENTS CONSIDERED TO BE RELEVANT

| Category* | Citation of document, with indication, where appropriate, of the relevant passages | Relevant to claim No. |
| --- | --- | --- |
| P,X<br><br>P,A | WO 2008/093619 A1  (Matsushita Electric Industrial Co., Ltd.),<br>07 August, 2008 (07.08.08),<br>Par. Nos. [0066] to [0069], [0112] to [0140];<br>Figs. 7 to 9<br>(Family: none) | 1-4,6-9,<br>11-13<br>5,10 |
| A | JP 2005-533454 A  (Motorola, Inc.),<br>04 November, 2005 (04.11.05),<br>Full text; Fig. 3<br>& US 2004/0013213 A1     & EP 1529346 A<br>& WO 2004/010596 A1     & KR 10-2005-0027248 A<br>& CN 1669229 A | 1-13 |
| A | WO 2006/080352 A1  (Matsushita Electric Industrial Co., Ltd.),<br>03 August, 2006 (03.08.06),<br>Full text; all drawings<br>& JP 2006-238423 A     & US 2009/0016263 A1<br>& CN 101133670 A | 1-13 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008111362 A
- JP 2004221702 A
- JP 2005198223 A

### Non-patent literature cited in the description

- **Y. Zhou ; J. Wang ; M. Sawahashi.** Downlink Transmission of Broadband OFCDM Systems-Part I: Hybrid Detection. *IEEE Transaction on Communication,* April 2005, vol. 53 (4), 718-729
- **D. Chase.** Code combining-A maximum likelihood decoding approach for combing and arbitrary number of noisy packets. *IEEE Trans. Commun.,* May 1985, vol. COM-33, 385-393
- **J. Hagenauer.** Rate-compatible punctured convolutional codes (RCPC codes) and their application. *IEEE Trans. Commun.,* April 1988, vol. 36, 389-400